# EUROPEAN PATENT APPLICATION

(11) **EP 4 792 721 A1**
(43) Date of publication of application: **19.08.2026**
(21) Application number: 26157123.6
(22) Date of filing: 09.02.2026
(51) Int. Cl.: A47L 11/283, A47L 11/40

(54) **ROBOT CLEANER STATION**

(30) Priority: 13.02.2025 KR 20250018878
(71) Applicant: LG Electronics Inc., Yeongdeungpo-gu Seoul 07336 (KR)
(72) Inventor: KIM, Sungjun, Seoul (KR); HWANG, Jungbae, Seoul (KR)
(74) Representative: Vossius & Partner Patentanwälte Rechtsanwälte mbB

(57) **Abstract**

The present invention relates to a robot cleaner station having an effect. The robot cleaner station includes a housing, a washing tub configured to support a lower portion of a robot cleaner and coupled to the housing in a withdrawable manner, a connection pipe through which water for washing a rag of the robot cleaner is supplied from the outside or wastewater used to wash the rag of the robot cleaner is discharged to the outside, a fitting part configured to connect the connection pipe and the housing, and a fitting coupling part disposed rearward of the washing tub and coupled to the fitting part, in which the fitting coupling part is formed with a drain hole configured to guide water, which leaks from the fitting part, to the washing tub, thereby preventing damage to an internal constituent element or a deterioration in function caused by water leakage.

## Description

### [Technical Field]

The present invention relates to a robot cleaner station, and more particularly, to a built-in robot cleaner station to which a robot cleaner is coupled, such that when the robot cleaner is coupled to the built-in station, the built-in station may collect dust from a dust bin of the robot cleaner, wash a rag of the robot cleaner, and dry the rag.

### [Background Art]

Recently, with the advancement of industrial technologies, robot cleaners, which clean zones required to be cleaned while autonomously traveling without user operations, have been developed.

The robot cleaner may be equipped with a sensor capable of recognizing a space to be cleaned, an agitator capable of cleaning and sweeping a floor surface, and a rag or the like capable of wiping the floor surface. The robot cleaner may travel while sucking dust from the floor surface in the space recognized by the sensor and wiping the floor surface with the rag or the like.

Among the robot cleaners, there are a dry robot cleaner capable of sucking and removing debris scattered on the floor surface, and a wet robot cleaner capable of wiping the floor surface with the rag containing moisture in order to effectively remove debris attached to the floor surface. The dry robot cleaner is equipped with a dust bin and sucks debris on the floor surface by using a suction force of a suction motor. The wet robot cleaner is equipped with a water container and is configured such that water accommodated in the water container is supplied to the rag and the rag containing moisture wipes the floor surface to effectively remove debris attached to the floor surface. In addition, there is also a robot cleaner having a shape equipped with both the agitator and the rag.

A charging stand for the robot cleaner refers to a device in which the robot cleaner, which has completed a cleaning process, is docked. The charging stand is configured to charge a battery provided in the robot cleaner by supplying electric power to the battery. The charging stand is equipped with a power supply module therein. The charging stand is equipped with a charging terminal connected to the power supply module, and the robot cleaner is equipped with a corresponding terminal. In case that the charging terminal and the corresponding terminal come into contact with each other, electric power is supplied to the battery, and the battery is charged.

Meanwhile, in case that the charging stand for the robot cleaner is disposed in a building, the charging stand occupies a predetermined range of an indoor space. In this case, spatial efficiency of the interior may deteriorate. In addition, there may be a risk that the robot cleaner may collide with a user or pet while the user or pet is moving, which causes injury or damage to both the user or pet and the robot cleaner.

In addition, in the case of a station to which a dust collection function of the robot cleaner is added, there is a limitation in that a volume occupied by the station increases, which may degrade the aesthetics of the interior.

Meanwhile, Chinese Utility Model Registration No. CN 218922468 U discloses a cleaner station in which a robot cleaner is coupled to a lower side of a washing machine, the robot cleaner is charged, dust is collected from the robot cleaner, and a wet rag of the robot cleaner is washed.

However, in the cleaner station, an open space into which the robot cleaner is introduced is formed below the washing machine, a device for supplying a detergent and water for cleaning a wet rag is provided vertically above the space into which the robot cleaner is introduced, and a dust bag is disposed at a lateral side of the space into which the robot cleaner is introduced.

Because this arrangement increases an overall height of the cleaner station, there is a limitation in that the cleaner station cannot be mounted by utilizing a lower space of furniture such as a sink.

In addition, because the cleaner station needs to be installed below the washing machine, a space for installing the washing machine needs to be basically and essentially provided. For this reason, there is a limitation in that an installation space having a height higher than a height of the washing machine and a height of the cleaner station needs to be provided.

In this regard, Chinese Utility Model Registration No. CN 218922467 U discloses a cleaner station in which a robot cleaner is coupled to a lower side of a washing machine, the robot cleaner is charged, dust is collected from the robot cleaner, and a wet rag of the robot cleaner is washed.

However, in the case of the cleaner station, a washing liquid in which a detergent and water are mixed is stored in a reservoir, and the washing liquid in the reservoir is supplied to wash the rag of the robot cleaner, which causes a limitation in that a level of water in the reservoir needs to be adjusted, and a ratio between the detergent and the water, which constitute the washing liquid, cannot be constant.

In addition, in the case of the cleaner station, the washing liquid is supplied into a space in which the robot cleaner is accommodated, which causes a limitation in that the supplied washing liquid scatters toward a robot cleaner main body instead of being supplied to the rag, and the washing liquid cannot be sufficiently supplied to the rag.

In case that water used to wash the rag leaks into the station, there is a problem in that electronic components or other important constituent elements inside the station may be damaged.

### [Disclosure]

### [Technical Problem]

The present invention is proposed to solve these problems of the robot cleaner station in the related art and aims to provide a robot cleaner station capable of being built-in below a kitchen cabinet without requiring a separate installation space.

The present invention also aims to provide a robot cleaner station capable of accommodating a robot cleaner in a lower space of a kitchen cabinet having a predetermined height limit.

The present invention also aims to provide a robot cleaner station capable of automatically collecting dust from an interior of a dust bin of a robot cleaner when the robot cleaner is coupled.

The present invention also aims to provide a robot cleaner station capable of maximizing a capacity of a dust bag.

The present invention also aims to provide a robot cleaner station capable of identifying whether a dust bag is coupled.

The present invention also aims to provide a robot cleaner station capable of sterilizing an interior of a dust bag.

The present invention also aims to provide a robot cleaner station capable of preventing damage to an electronic component by detecting water leakage occurring in the cleaner station.

### [Technical Solution]

In order to achieve the above-mentioned objects, a robot cleaner station according to the present invention may include: a housing; a washing tub configured to support a lower portion of a robot cleaner and coupled to the housing in a withdrawable manner; a connection pipe through which water for washing a rag of the robot cleaner is supplied from the outside or wastewater used to wash the rag of the robot cleaner is discharged to the outside; a fitting part configured to connect the connection pipe and the housing; and a fitting coupling part disposed rearward of the washing tub and coupled to the fitting part, in which the fitting coupling part is formed with a drain hole configured to guide water, which leaks from the fitting part, to the washing tub.

In addition, the fitting part may include a water supply fitting part to which a water supply connection pipe through which water introduced from an external water supply source is supplied into the housing is detachably coupled, and the fitting coupling part may be formed with a stepped portion formed between a portion where the water supply fitting part is coupled and a portion where the drain hole is formed.

In addition, the fitting coupling part may include an inclined surface inclined downward in a direction in which the drain hole is positioned.

Meanwhile, the robot cleaner station may include: an inner chamber disposed below the fitting coupling part and configured to collect a liquid.

In addition, the inner chamber may be formed with a flow path hole configured to guide the liquid, which is collected in the inner chamber, to the washing tub.

In addition, the inner chamber may include: a chamber main body; and a component seating portion protruding from the chamber main body and configured to accommodate a component in the housing, and an uppermost end of the component seating portion may be positioned to be higher than the flow path hole.

Meanwhile, the robot cleaner station may include: a rag drying part configured to discharge hot air between a pair of rags disposed at a lower side of the robot cleaner and disposed to be vertically symmetric; and a printed circuit board disposed rearward of the washing tub and configured to control a power source, in which the inner chamber is positioned at a side opposite to a side at which the printed circuit board is disposed based on the rag drying part.

Meanwhile, the robot cleaner station may include: a wastewater container configured to store water used to wash the rag; and a wastewater discharge port disposed in a rear surface of the wastewater container and configured to discharge the water to the outside from an interior of the wastewater container, in which the inner chamber is disposed vertically below the wastewater discharge port.

In addition, the robot cleaner station may include: a washing water supply part configured to mix a detergent for washing the rag with purified water supplied through the connection pipe, in which the inner chamber is disposed vertically below the washing water supply part.

Meanwhile, the washing tub may include a level detection sensor configured to detect a level of a liquid in the washing tub.

In addition, the level detection sensor may operate while detecting an electric current flowing through the liquid.

Meanwhile, a leakage detection sensor may be disposed on a bottom surface of the inner chamber.

In addition, the connection pipe may include a water supply connection pipe through which water introduced from an external water supply source is supplied into the housing, the fitting part may include a water supply fitting part detachably coupled to the water supply connection pipe, and the water supply fitting part may be pivotably coupled to the fitting coupling part.

In addition, the connection pipe may include a water drain connection pipe through which water in the housing is discharged to the outside, the fitting part may include a water drain fitting part detachably coupled to the water drain connection pipe, and the water drain fitting part may have a branched shape extending in opposite directions.

### [Advantageous Effects]

According to the robot cleaner station according to the present invention described above, the module, which may charge the robot cleaner, collect dust, and wash the rag, may be disposed in the direction parallel to the robot cleaner, such that the lower space of the kitchen cabinet may be utilized.

In addition, the charging terminal, the dust collection part, the rag washing part, and the rag drying part are disposed to be surrounded based on the robot cleaner, such that various functions of the robot cleaner may be performed.

In addition, the surfaces, which exclude the front surface, may be covered by the kitchen cabinet, thereby providing the user with an aesthetic interior appearance.

In addition, it is possible to detect water leakage, thereby preventing damage to internal constituent elements or deterioration in functions caused by the water leakage.

### [Description of Drawings]

FIG. 1 is a view for explaining a state in which a cleaner system according to an embodiment of the present invention is installed below a kitchen cabinet.
FIG. 2 is a view for explaining a relationship in which a pipe of the cleaner system according to the embodiment of the present invention is connected to a water drain pipe.
FIG. 3 is a perspective view for explaining the cleaner system according to the embodiment of the present invention.
FIG. 4 is a top plan view of FIG. 3.
FIG. 5 is a perspective view for explaining a robot cleaner according to the embodiment of the present invention.
FIG. 6 is a side view of FIG. 5.
FIG. 7 is a bottom plan view of FIG. 5.
FIG. 8 is a rear view of FIG. 5.
FIG. 9 is a perspective view for explaining a structure of a robot cleaner station according to the embodiment of the present invention.
FIG. 10 is a perspective view for explaining a door part of the robot cleaner station according to the embodiment of the present invention.
FIG. 11 is a front view of FIG. 10.
FIG. 12 is a perspective view for explaining an internal structure of the robot cleaner station according to the embodiment of the present invention.
FIGS. 13 and 14 are views for explaining a washing plate and a washing tub of the robot cleaner station according to the embodiment of the present invention.
FIG. 15 is a view for explaining a dust collection part of the robot cleaner station according to the embodiment of the present invention.
FIG. 16 is an enlarged view for explaining a rag washing part of the robot cleaner station according to the embodiment of the present invention.
FIG. 17 is an enlarged view for explaining a washing water supply part of the rag washing part of the robot cleaner station according to the embodiment of the present invention.
FIGS. 18 and 19 are views for explaining an outside air supply module of the robot cleaner station according to the embodiment of the present invention.
FIG. 20 is a view for explaining an air discharge port of the robot cleaner station according to the embodiment of the present invention.
FIG. 21 is an enlarged view for explaining a fitting part of the robot cleaner station according to the embodiment of the present invention.
FIG. 22 is a rear view for explaining an arrangement relationship of an inner chamber in the robot cleaner station according to the embodiment of the present invention.
FIG. 23 is a left side view for explaining the arrangement relationship of the inner chamber in the robot cleaner station according to the embodiment of the present invention.
FIG. 24 is an enlarged view for explaining the inner chamber of the robot cleaner station according to the embodiment of the present invention.
FIG. 25 is a cross-sectional view for explaining the inner chamber of the robot cleaner station according to the embodiment of the present invention.
FIG. 26 is an enlarged view for explaining a height of a flow path hole in the robot cleaner station according to the embodiment of the present invention.
FIG. 27 is an enlarged view for explaining a level detection sensor of the robot cleaner station according to the embodiment of the present invention.
FIG. 28 is a block diagram for explaining a control configuration of the robot cleaner station according to the embodiment of the present invention.

### [Mode for Invention

Hereinafter, exemplary embodiments of the present invention will be described in detail with reference to the accompanying drawings.

The present invention may be variously modified and may have various embodiments, and particular embodiments illustrated in the drawings will be specifically described below.

In the description of the present invention, the terms such as "first" and "second" may be used to describe various constituent elements, but the constituent elements may not be limited by the terms. These terms are used only to distinguish one constituent element from another constituent element. For example, a first component may be named a second component, and similarly, the second component may also be named the first component, without departing from the scope of the present invention.

The term "and/or" may include any and all combinations of a plurality of the related and listed items.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

The terminology used herein is used for the purpose of describing particular embodiments only and is not intended to limit the present invention. Singular expressions may include plural expressions unless clearly described as different meanings in the context.

The terms "comprises," "comprising," "includes," "including," "containing," "has," "having" or other variations thereof are inclusive and therefore specify the presence of stated features, integers, steps, operations, elements, components, and/or combinations thereof, but do not preclude the presence or addition of one or more other features, integers, steps, operations, elements, components, and/or combinations thereof.

Unless otherwise defined, all terms used herein, including technical or scientific terms, may have the same meaning as commonly understood by those skilled in the art to which the present invention pertains. The terms such as those defined in a commonly used dictionary may be interpreted as having meanings consistent with meanings in the context of related technologies and may not be interpreted as ideal or excessively formal meanings unless explicitly defined in the present application.

Further, the following embodiments are provided to more completely explain the present invention to those skilled in the art, and shapes and sizes of elements illustrated in the drawings may be exaggerated for a more apparent description.

### KITCHEN CABINET AND CLEANER SYSTEM

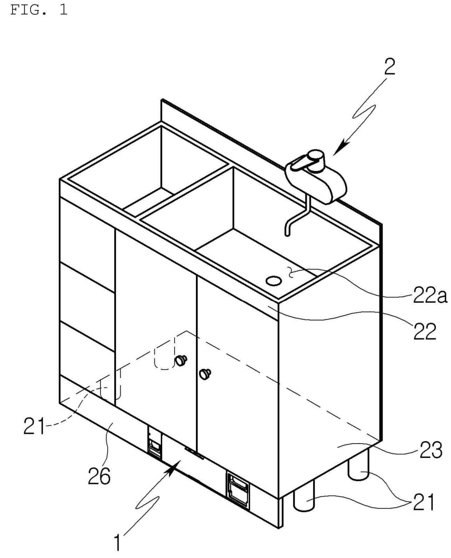

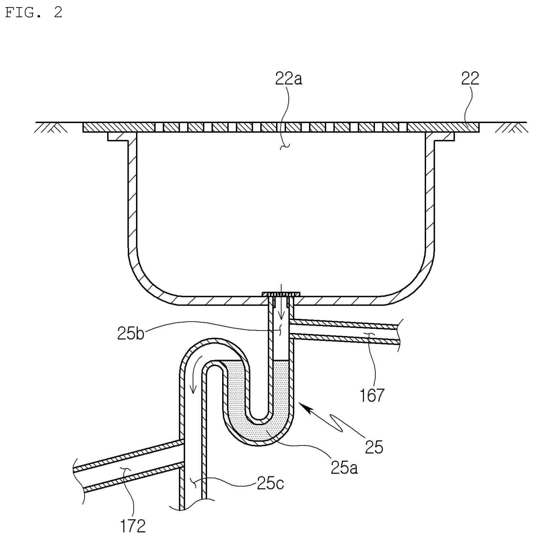

FIG. 1 is a view for explaining a state in which a cleaner system according to an embodiment of the present invention is installed below a kitchen cabinet, and FIG. 2 is a view for explaining a relationship in which a pipe of the cleaner system according to the embodiment of the present invention is connected to a water drain pipe.

With reference to FIGS. 1 and 2, a cleaner system 1 according to an embodiment of the present invention may be provided below a kitchen cabinet 2. Specifically, the kitchen cabinet 2 may be disposed in a kitchen and provide a space in which dishes, plates, cups, and the like may be accommodated and food preparation or dishwashing may be performed.

In addition, the kitchen cabinet 2 may be equipped with an upper plate (worktop) capable of serving as a sink, a cooking stage, or a working stage.

For example, the kitchen cabinet 2 may include a sink configured to provide a space in the upper plate so that dishwashing may be performed. Alternatively, the kitchen cabinet 2 may include a cooking stage on which food preparation is performed. In addition, the kitchen cabinet 2 may include a gas range stage on the upper plate on which a gas range, an induction cooktop, a halogen hob, an oven, or the like is installed.

In general, a standard cabinet having a width of 600 mm in a forward/rearward direction and a width of 600 mm in a leftward/rightward direction may be used as the kitchen cabinet 2.

The cleaner system 1 according to another embodiment of the present invention may be provided below a structure including at least any one of a water supply pipe and a water drain pipe. Specifically, the water supply pipe may refer to a flow path connected to an external water supply source configured to supply a fluid to the structure, and the water drain pipe may refer to a flow path configured to discharge a fluid, which is discharged from the structure, to a sewage system.

A storage cabinet configured to store dishes, kitchen tools, and the like may be provided below the kitchen cabinet 2 or the structure. That is, the kitchen cabinet 2 or the structure may include an upper plate 22 configured to provide a space in which tasks such as cooking or dishwashing may be performed, a lower plate 23 disposed to be spaced apart from a ground surface by a predetermined height, and an accommodation space formed between the upper plate 22 and the lower plate 23 and configured to accommodate dishes, kitchen tools, and the like. In this case, in case that the kitchen cabinet 2 is a sink, a basin 22a may be disposed in the upper plate 22.

In addition, the lower plate 23 may be supported by pedestals 21. The pedestals 21 may be disposed in a direction perpendicular to a floor of the kitchen and support a load of the kitchen cabinet 2. In this case, a space may be formed between the floor of the kitchen and the lower plate 23 in accordance with heights of the pedestals 21.

On the contrary, the kitchen cabinet 2 may be fixed to a wall of a building without the pedestal 21. Even in this case, a space may be formed between the floor of the kitchen and the lower plate 23.

The cleaner system 1 according to the embodiment of the present invention is mounted in a space (hereinafter, referred to as a 'mounting space') between the floor of the kitchen and the lower plate 23, as described above.

For example, the mounting space may have a height of 200 mm or less, and generally, a height of 160 mm or less.

Therefore, according to the present invention, the cleaner system 1 is disposed in a lower space of the kitchen cabinet 2, which minimizes a degree to which the cleaner system 1 is exposed to the outside.

In addition, the cleaner system 1 does not occupy a separate space in comparison with a case in which a charging stand for a robot cleaner is disposed in a predetermined space of a living room, a room, or a kitchen. The cleaner system 1 is disposed in an unused space formed by the kitchen cabinet 2, thereby maximizing spatial efficiency.

Meanwhile, the kitchen cabinet 2 or the structure is equipped with a water drain pipe 25 capable of draining liquids used for cooking or water used for dishwashing. At least a part of the water drain pipe 25 may be disposed in the accommodation space formed between the upper plate 22 and the lower plate 23. In general, the water drain pipe 25 may be connected to a drain port formed in the basin 22a of the sink. The water drain pipe 25 includes a U-trap 25a configured to prevent a reverse flow of contaminated gas or offensive odor. The U-trap 25a may be disposed in the accommodation space. A liquid introduced through the drain port flows downward by gravity at an upstream side 25b of the U-trap and accumulates in the U-trap 25a. When the liquid accumulates so that a level of the liquid becomes equal to or higher than a preset predetermined level by the U-trap 25a, the liquid may flow downward along a downstream side 25c of the U-trap and be discharged to the sewage system.

The cleaner system 1 according to the embodiment of the present invention may wash and dry rags 242 of a robot cleaner 200 by using the above-mentioned water drain pipe 25.

In addition, although not illustrated, the kitchen cabinet 2 may be equipped with the water supply pipe. Fresh water (or purified water) may be supplied to the cleaner system 1 through the water supply pipe.

Hereinafter, a specific structure of the cleaner system 1 will be described.

### CLEANER SYSTEM

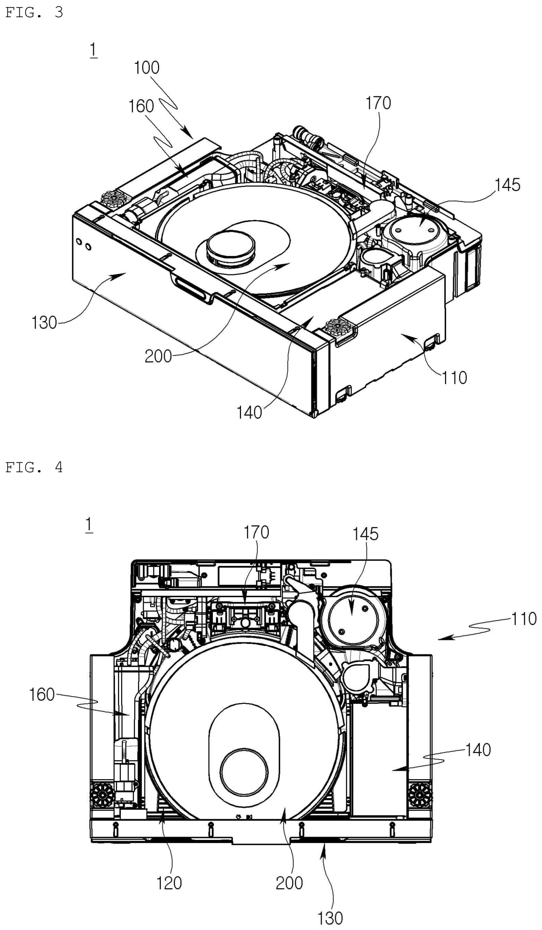

Meanwhile, FIGS. 3 and 4 are views for explaining the cleaner system according to the embodiment of the present invention.

The cleaner system 1 according to the embodiment of the present specification may include a robot cleaner station 100 and the robot cleaner 200.

The cleaner system 1 includes the robot cleaner station 100. The robot cleaner 200 may be coupled to the robot cleaner station 100. Specifically, the robot cleaner 200 may enter a front side of the robot cleaner station 100, and the robot cleaner 200 may be accommodated in the robot cleaner station 100. The robot cleaner station 100 may remove dust from a dust bin 220 of the robot cleaner 200. The robot cleaner station 100 may wash a rotary cleaning part 240 of the robot cleaner 200. The robot cleaner station 100 may dry the rotary cleaning part 240 of the robot cleaner 200. The robot cleaner station 100 may supply electric power to the robot cleaner 200.

### ROBOT CLEANER

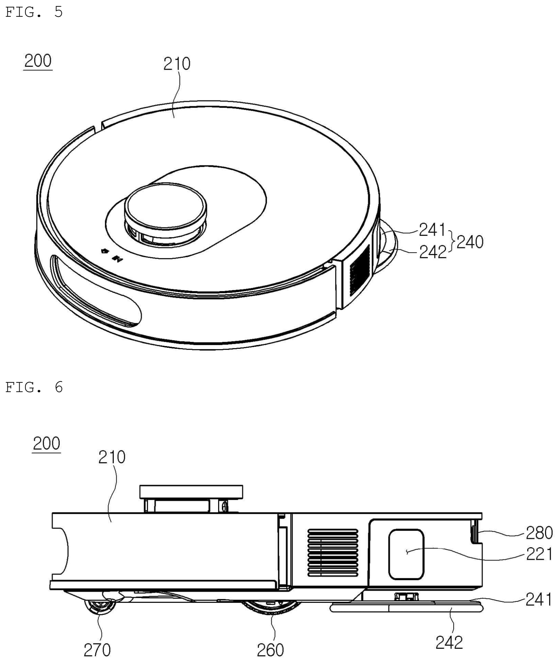

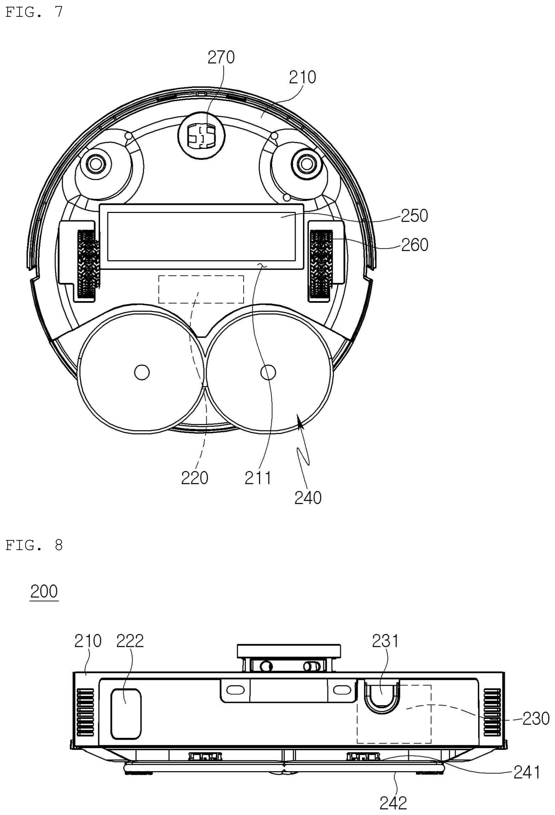

Meanwhile, FIGS. 5 to 8 are views for explaining the robot cleaner in the robot cleaner system according to the embodiment of the present invention.

A structure of a robot cleaner 200 will be described below with reference to FIGS. 5 to 8.

The robot cleaner 200 may automatically clean a zone to be cleaned by sucking foreign substances such as dust from a floor while autonomously traveling in the zone to be cleaned.

The robot cleaner 200 according to the embodiment of the present invention is configured to be placed on a floor and clean the floor while moving on a floor surface. Therefore, hereinafter, an upward/downward direction is defined based on a state in which the robot cleaner 200 is placed on the floor.

Further, based on a pair of wheels 260, a side at which an auxiliary wheel 270 to be described below is defined as a front side, and a side at which the rotary cleaning part 240 to be described below is disposed is defined as a rear side.

Among the portions described in the embodiment of the present invention, a 'lowermost portion' may be a portion positioned at a lowest position or a portion closest to the floor when the robot cleaner 200 according to the embodiment of the present invention is placed on the floor and used.

The robot cleaner 200 according to the embodiment of the present invention includes a body 210, the dust bin 220, a water container 230, the rotary cleaning part 240, an agitator 250, the wheels 260, the auxiliary wheel 270, and a charging terminal 280.

The body 210 may define an overall external shape of the robot cleaner 200. Components constituting the robot cleaner 200 may be coupled to the body 210, and some of the components constituting the robot cleaner 200 may be accommodated in the body 210.

Specifically, the components of the robot cleaner 200 may be provided in a space in the body 210. For example, a battery and at least one motor may be accommodated in the space in the body 210.

In the embodiment of the present invention, the body 210 has a shape in which a width (or diameter) in a horizontal direction is larger than a height in an upward/downward direction. The body 210 may provide an advantageous structure that assists the robot cleaner 200 in having a stable structure and allows the robot cleaner 200 to avoid an obstacle while moving traveling.

The body 210 may have various shapes such as a circular shape, an elliptical shape, or a quadrangular shape when viewed from above or below.

The body 210 may be divided into a lower body and an upper body, and the lower body and the upper body may be coupled to define the space in the body 210.

The lower body may be coupled to the upper body to define the space capable of accommodating therein the battery, at least one sensor, and at least one motor.

A suction part 211 into which air is introduced may be formed in the lower body, and a hole configured to accommodate the pair of wheels 260 may be formed in the lower body.

The suction part 211 may be a passageway into which dust on the floor surface is introduced. Further, the suction part 211 may communicate with a suction flow path (not illustrated) formed in the body 210, and the suction flow path may communicate with an internal space of the dust bin 220.

Meanwhile, the lower body may be further provided with an air discharge flow path. One side of the air discharge flow path may communicate with the internal space of the dust bin 220, and the other side of the air discharge flow path may communicate with an air discharge outlet. In this case, a filter may be disposed in the air discharge outlet.

With this configuration, the air introduced through the suction part 211 may flow into the dust bin 220 through the suction flow path and be discharged to the air discharge outlet through the air discharge flow path.

The agitator 250 to be described below may be rotatably accommodated in the suction part 211. With this configuration, dust present around the suction part 211 may be guided into the suction part 211 by a rotation of the agitator 250, thereby improving efficiency in sucking dust.

The upper body may define an external appearance of an upper side of the robot cleaner 200. Although not illustrated, a display may be provided on the upper body.

The robot cleaner 200 of the present invention may include a bumper. The bumper is coupled along a rim of the body 210 and configured to move relative to the body 210.

The bumper may be coupled along a part of the rim of the body 210 or coupled along the entire rim of the body 210. At least one elastic member (not illustrated) may be provided between the bumper and the body 210. With this configuration, when the bumper comes into contact with an obstacle or the like and relatively moves toward a center of the body 210, the bumper may be returned to an original position by a restoring force of the elastic member (not illustrated), and the elastic member (not illustrated) may absorb or disperse impact applied to the bumper to prevent and reduce the transmission of the impact to the body 210.

The dust bin 220 may be provided to suck outside dust and air and store dust.

The dust bin 220 may store dust that passes through the suction flow path and is introduced. The dust bin 220 may have a dust inlet port configured to communicate with the suction flow path, the internal space capable of storing dust, and an air discharge port through which air may be discharged.

The dust bin 220 may be provided in the body 210. In this case, the dust bin 220 may be fixedly coupled to the body 210. Of course, according to the embodiment, the dust bin 220 may be separably provided.

Meanwhile, in the present invention, a dust discharge flow path may be formed in the dust bin 220. The dust discharge flow path may allow the internal space of the dust bin 220 and an external space of the robot cleaner 200 to communicate with each other. With this configuration, in case that the robot cleaner station 100 collects dust, the dust in the dust bin 220 may be removed.

Meanwhile, a dust discharge port 221, which communicates with the dust discharge flow path, may be formed in the dust bin 220 according to the embodiment of the present invention. For example, the dust discharge port 221 may be formed at one side of a rear side of an outer surface (or outer peripheral surface) of the body 210. In another example, the dust discharge port 221 may be formed in an outer surface of the dust bin 220.

In addition, the robot cleaner 200 according to the embodiment of the present invention may have a dust bin door 222 configured to selectively open or close the dust discharge port 221. Specifically, the dust bin door 222 may be coupled to the body 210 and disposed at a position at which the dust bin door 222 may block the dust discharge port 221. For example, the dust bin door 222 may be made of rubber or resin and configured to be flipped, and one side of the dust bin door 222 may be fixedly coupled to the body 210.

With this configuration, when a dust collection motor 145 of the robot cleaner station 100 to be described below operates, the dust bin door 222 is elastically deformed by driving power of the dust collection motor 145, and the dust discharge port 221 is opened, such that the dust in the dust bin 220 may be collected by a dust collection part 140 of the robot cleaner station 100.

The water container 230 may be provided in the form of a container having an internal space to store therein a liquid such as water. The water container 230 may be disposed in the body 210 and fixedly coupled to the body 210 or detachably coupled to the body 210.

The water container 230 include a supply part 231 and a nozzle (not illustrated). The supply part 231 may be configured to supply a liquid such as water from the outside. For example, the supply part 231 may have an injection port formed at the other side of the rear side of the outer surface (or outer peripheral surface) of the body 210, and the supply part 231 may be connected to a storage space in the water container 230 through a water supply hose.

In this case, with a relationship with the dust discharge port 221, the supply part 231 may be disposed at a side opposite to the robot cleaner 200 in a leftward/rightward direction. For example, in case that the dust discharge port 221 is disposed at a rear left side of the body 210, the supply part 231 may be disposed at a rear right side of the body 210.

With the above-mentioned configuration, in the state in which the robot cleaner 200 is coupled to a robot cleaner station 100, the robot cleaner station 100 may perform both the dust collection and the water injection.

Meanwhile, the nozzle (not illustrated) is provided in the form of a tube or pipe and connected to the water container 230 so that the liquid in the water container 230 may flow through the interior of the nozzle. The nozzle (not illustrated) may be disposed such that one side thereof is connected to the water container 230, and the other end thereof is positioned above a pair of rotary plates 241 or positioned on each of the pair of rotary plates 241. Therefore, the liquid in the water container 230 may be supplied to the pair of rags 242.

That is, the nozzle (not illustrated) may be provided in a shape in which two tube portions are diverged from a single tube portion. In this case, an end of one diverged tube portion may be positioned above a left rag, and an end of the other diverged tube portion may be positioned above a right rag.

Meanwhile, although not illustrated, the water container 230 is equipped with a pump, and the pump may allow the water in the water container 230 to flow to the nozzle (not illustrated). Therefore, when the pump of the water container 230 operates, the liquid stored in the water container 230 may be discharged to the rotary cleaning part 240 through the nozzle (not illustrated).

The rotary cleaning part 240 includes the rotary plates 241 and the rags 242.

The rotary plates 241 may be provided as the pair of rotary plates 241 including a left rotary plate and a right rotary plate, and the rags 242 may be provided as the pair of rags 242 including the left rag and the right rag.

The rotary plate 241 may be rotatably disposed on a bottom surface of the body 210, and the rag 242 may be coupled to a lower side of the rotary plate 241.

The rotary plate 241 has a predetermined area and is provided in the form of a flat plate, a flat frame, or the like. The rotary plate 241 is laid approximately horizontally. Therefore, the rotary plate 241 has a shape in which a width (or diameter) thereof in the horizontal direction is sufficiently larger than a height thereof in the upward/downward direction. The rotary plate 241 coupled to the body 210 may be parallel to the floor surface or inclined with respect to the floor surface. The rotary plate 241 may have a circular plate-like shape, the bottom surface of the rotary plate 241 may have an approximately circular shape, and the rotary plate 241 may have a rotationally symmetrical shape as a whole.

The pair of rotary plates 241 may be vertically symmetric.

The rag 242 may be coupled to the lower side of the rotary plate 241 so as to face the bottom surface.

The rag 242 is configured such that a bottom surface of the rag 242 facing the floor has a predetermined area. The rag 242 has a flat shape. The rag 242 is configured such that a width (or diameter) thereof in the horizontal direction is sufficiently larger than a height thereof in the upward/downward direction. When the rag 242 is coupled to the body 210, the bottom surface of the rag 242 may be parallel to the floor or inclined with respect to the floor.

The bottom surface of the rag 242 may have an approximately circular shape, and the rag 242 may have a rotationally symmetrical shape as a whole. In addition, the rag 242 may be attached to or detached from the bottom surface of the rotary plate 241. The rag 242 may be coupled to the rotary plate 241 and rotate together with the rotary plate 241.

Meanwhile, although not illustrated, the rotary cleaning part 240 may be equipped with a drive part configured to apply a rotational force to the rotary plate 241. For example, the drive part may be provided with a motor and at least one gear. Therefore, when the drive part operates, the rotary plates 241 and the rags 242 may rotate to wipe and clean the floor surface.

The agitator 250 may have a plurality of brushes configured to be rotatable and guide outside dust and air into the dust bin 220. In this case, the agitator 250 may be provided with at least one gear.

Meanwhile, the agitator 250 according to the present embodiment may be equipped with a separate agitator motor (not illustrated) to receive rotational power. According to the embodiment, the agitator 250 may also receive rotational power from a driving motor or receive rotational power from the drive part of the rotary cleaning part 240.

The wheels 260 may be provided on the bottom surface of the body 210 and connected to the drive part (not illustrated). In this case, the drive part (not illustrated) may be coupled to the body 210.

The wheels 260 may be provided on the body 210 and roll on the floor.

The wheels 260 may include a first driving wheel and a second driving wheel. In this case, the first driving wheel may be identical to the second driving wheel, or the first driving wheel and the second driving wheel may be symmetric. For example, in case that the first driving wheel is positioned at the left side of the robot cleaner 200, the second driving wheel may be positioned at the right side of the robot cleaner 200. In this case, the first driving wheel and the second driving wheel may be symmetric vertically.

The drive part (not illustrated) may include driving motors and gears. In this case, the driving motors may be accommodated in the body 210 and provide power to the wheels 260. The driving motors may include a first driving motor and a second driving motor.

The driving motor may be configured as an electric motor. The plurality of gears engage with one another and rotate. The plurality of gears connect the driving motors and the wheels 260 and transmit rotational power of the driving motors to the wheels 260. Therefore, the wheels 260 may rotate when rotary shafts of the driving motors rotate.

With this configuration, when the driving motors operate, the wheels 260 may rotate, and the body 210 may travel on the floor surface at a predetermined traveling speed.

The auxiliary wheel 270 may be provided on a lower surface of the body 210 and roll on the floor surface (cleaning target surface). The auxiliary wheel 270, together with the pair of wheels 260, may support the body 210 on the floor surface. With this configuration, the auxiliary wheel 270 may guide a motion of the robot cleaner 200 while minimizing friction between the robot cleaner 200 and the floor surface.

The suction motor (not illustrated) may generate a suction force capable of sucking outside dust and air through the suction part 211. For example, the suction motor (not illustrated) may be an electric motor. By the suction force generated by the suction motor (not illustrated), outside dust and air may be introduced into the suction part 211 and reach the dust bin 220 after passing through the suction flow path.

Although not illustrated, the battery is coupled to the body 210 and configured to supply electric power to other components constituting the robot cleaner 200. The battery may supply electric power to at least one motor provided in the robot cleaner 200. For example, the battery may supply electric power to the motors provided in the rotary cleaning part 240, the agitator 250, the wheel 260, and the suction motor (not illustrated).

In addition, the battery may supply electric power to a sensor part (not illustrated) and a controller (not illustrated).

The battery may be charged with external electric power. To this end, the charging terminal 280 for charging the battery may be provided at one side of the body 210. For example, the charging terminal 280 may be disposed at a rear side of the outer surface of the body 210. The charging terminal 280 may be supplied with electric power by coming into contact with an electric power supply terminal 123b of the robot cleaner station 100 when the robot cleaner 200 is coupled to the robot cleaner station 100.

### ROBOT CLEANER STATION

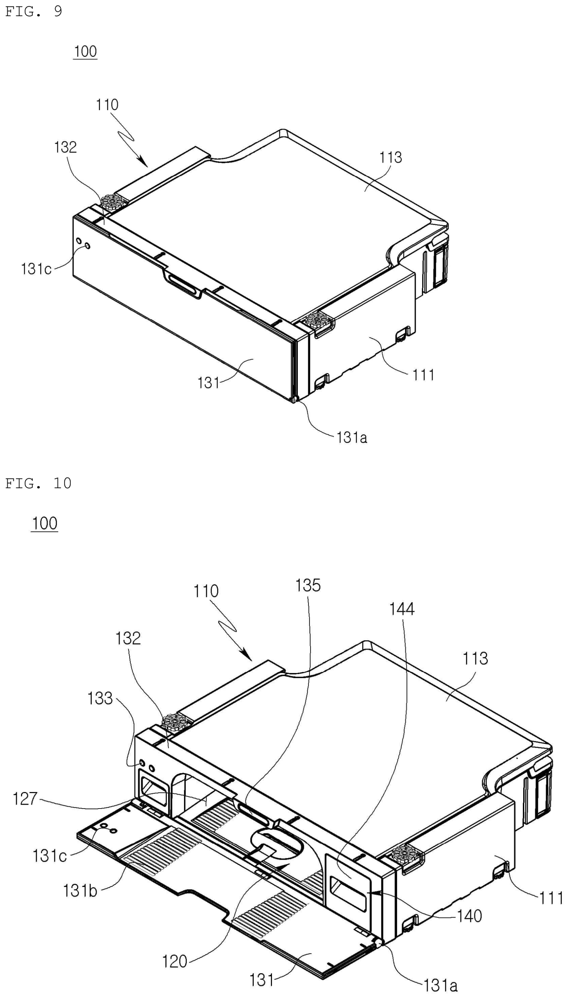

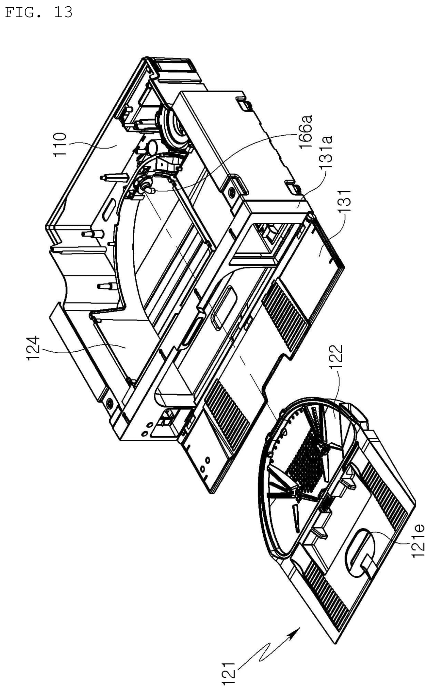

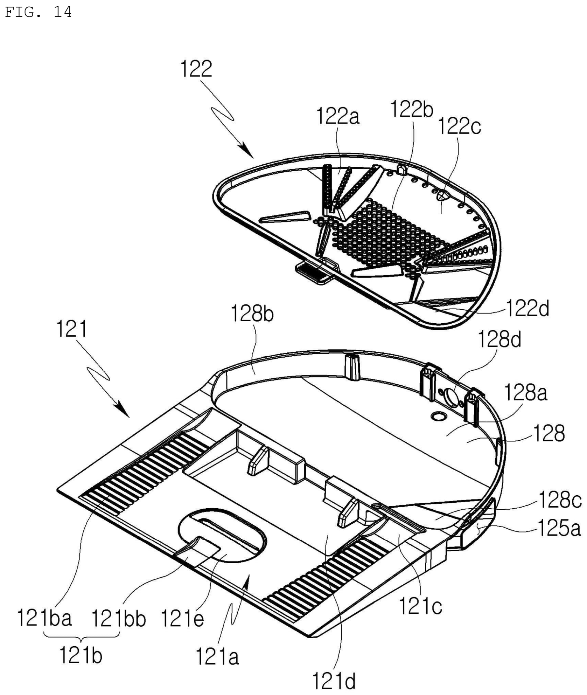

The robot cleaner station 100 of the present invention will be described below with reference to FIGS. 3 to 14.

The robot cleaner 200 may be accommodated in the robot cleaner station 100. The robot cleaner 200 may be coupled to a seating part 120 of the robot cleaner station 100.

The robot cleaner station 100 may include a housing 110.

The housing 110 may define an external appearance of the robot cleaner station 100. For example, the housing 110 may be formed in a shape similar to a hexahedral shape including at least one outer wall surface.

The housing 110 may be formed with a space in which the seating part 120, a door part 130, the dust collection part 140, a rag washing part 160, and a rag drying part 170 may be accommodated.

The housing 110 may be mounted below the kitchen cabinet 2. Specifically, the housing 110 may be installed in a mounting space formed between the lower plate 23 of the kitchen cabinet 2 and the floor of the kitchen.

The housing 110 includes a pair of outer walls 111 provided to face each other. The outer wall 111 may refer to a surface formed in a gravitational direction.

For example, the pair of outer walls 111 may be installed below the kitchen cabinet 2 at predetermined intervals. In this case, the housing 110 may further include a bottom surface 112 facing the floor of the kitchen, and the pair of outer walls 111 may be connected through the bottom surface 112. Meanwhile, the housing 110 may further include an upper cover 113 facing the lower plate 23 of the kitchen cabinet 2, and the upper cover 113 may be separably coupled to upper ends of the pair of outer walls 111. Therefore, it is possible to prevent the constituent components of the robot cleaner 200 and the robot cleaner station 100 from being contaminated even in case that debris falls downward from the kitchen cabinet 2. In addition, the housing 110 may further include a rear surface 115 facing the wall of the building. With this configuration, the constituent components of the robot cleaner station 100 may be accommodated in the housing 110 (between the pair of outer wall surfaces).

In addition, the robot cleaner 200 may be accommodated in the housing 110. The housing 110 may be disposed such that the pair of outer walls 111 have an interval larger than a maximum width of the robot cleaner 200 in the horizontal direction. With this configuration, the robot cleaner 200 may enter or exit the interior of the housing 110.

In this case, in the present embodiment, the robot cleaner 200 may enter or exit the front side of the robot cleaner station 100. In this case, the front side may refer to a direction in which a door 131 is provided based on the interior of the robot cleaner station 100.

In addition, the rear side may refer to a direction opposite to the front side based on the interior of the robot cleaner station 100. For example, the wall (not illustrated) of the building may be disposed rearward of the robot cleaner station 100.

In addition, the left side may be referred to as a leftward side and the right side may be referred to as a rightward side when the front side is viewed from the interior of the robot cleaner station 100.

That is, the outer walls 111 of the robot cleaner station 100 may be respectively disposed at the left side and the right side.

Therefore, the upper side of the housing 110 may be covered by the kitchen cabinet 2, and the lower side of the housing 110 may be covered by the floor of the kitchen. In addition, the left and right surfaces of the housing 110 are kept covered by the outer walls, and the housing 110 is disposed below the kitchen cabinet 2. In this case, the lower portion of the kitchen cabinet 2, which excludes the robot cleaner station 100, is finished by a baseboard 26. As a result, only the front surface of the housing 110 may be exposed to the outside.

Therefore, it is possible to minimize a degree to which the robot cleaner station 100 and the robot cleaner 200 are exposed to the outside.

With this configuration, the robot cleaner station 100 of the present invention may provide an aesthetic appearance to a user in terms of interior aesthetics.

Meanwhile, the housing 110 may have a space through which a water supply hose connected to the water supply pipe passes, a space through which a water drain hose, through which wastewater produced after the process of washing the rag 242 is discharged, passes, and a space through which a hose, through which moisture produced during the process of drying the rag 242 is discharged, passes. For example, a space through which the hoses may pass may be formed in the outer wall 111 of the housing 110.

### LAYOUT

The robot cleaner station 100 according to the embodiment of the present invention is characterized by being installed in the lower space of the kitchen cabinet 2.

To this end, the robot cleaner station 100 according to the embodiment of the present invention is characterized by being disposed in the horizontal direction in accordance with a space formed between the lower plate 23 of the kitchen cabinet 2 and the floor of the kitchen.

Specifically, in the robot cleaner station 100 according to the embodiment of the present invention, the dust collection part 140 and/or the rag washing part 160 may be disposed on a lateral surface of an inlet/outlet 127.

In this case, in case that both the dust collection part 140 and the rag washing part 160 are provided, the seating part 120 may be disposed between the dust collection part 140 and the rag washing part 160.

For example, the inlet/outlet 127 and the door 131 may be disposed at the front side of the robot cleaner station 100. Further, the seating part 120 to which the robot cleaner 200 is coupled may be disposed rearward of the inlet/outlet 127. In this case, the dust collection part 140 may be disposed rearward by a predetermined length from a front end of the robot cleaner station 100. In addition, the rag washing part 160 may be disposed rearward by a predetermined length from the front end of the robot cleaner station 100.

Therefore, when the robot cleaner station 100 is viewed from a front outer side of the robot cleaner station 100, a front end of the dust collection part 140 and/or a front end of the rag washing part 160 may be disposed at left and right sides of the inlet/outlet 127.

In this case, a dust bag drawer 144 of the dust collection part 140 may be configured to be withdrawn forward from the housing 110. In addition, a detergent container 163 of the rag washing part 160 may be configured to be withdrawn forward from the housing.

Meanwhile, a rear end of a dust collection part housing 141 and a rear end of the detergent container 163 may be disposed to be spaced apart from a rear end of the housing 110 at a predetermined interval. Further, the dust collection motor 145 may be disposed between the rear end of the dust collection part housing 141 and the rear end of the housing 110. With this configuration, it is possible to minimize an entire space occupied by the seating part 120, the dust collection part housing 141, and the dust collection motor 145 within a limited space.

In addition, a flow path, through which the washing water for washing the rag 242 may flow, may be at least partially disposed between the rear end of the housing 110 and the rear end of the detergent container 163. With this configuration, a route along which the washing water is introduced from the water supply pipe may have a shortest distance. In addition, it is possible to minimize an entire space occupied by the seating part 120, the detergent container 163, and the flow path, through which the washing water flows, within a limited space.

Meanwhile, in the robot cleaner station 100, the rag drying part 170 may be disposed rearward of the seating part 120. In this case, the rag drying part 170 may be disposed between a rear end of the seating part 120 and the rear end of the housing 110.

Therefore, in the robot cleaner station 100 according to the embodiment of the present invention, the dust collection part 140 and the rag washing part 160 may be disposed on the left and right lateral surfaces based on the seating part 120, and the rag drying part 170 may be disposed at the rear side.

That is, in the robot cleaner station 100 according to the embodiment of the present invention, all the dust collection part 140, the rag washing part 160, and the rag drying part 170 are disposed within a predetermined distance range from an outer periphery of the seating part 120.

This provides an effect of shortening a distance between the dust bin 220 of the robot cleaner 200 and the dust collection part 140, thereby minimizing a flow path loss. In addition, it is possible to restrict a range in which the washing water is present and wastewater produced after the washing process is present by minimizing a distance between the rag 242 of the robot cleaner 200 and the rag washing part 160 and a distance between the rag 242 of the robot cleaner 200 and the rag drying part 170.

In addition, with the above-mentioned arrangement, all the constituent components of the robot cleaner station 100 of the present invention may be disposed within a limited height.

As a result, in the robot cleaner station 100 according to the embodiment of the present invention, the dust collection part 140, the rag washing part 160, and the rag drying part 170 may be disposed on the three surfaces that surround the seating part 120, except for the front surface into which the robot cleaner 200 is introduced. With the above-mentioned arrangement, even in a situation in which a height in the vertical direction is restricted, the minimum horizontal space may be used not only to charge the robot cleaner 200, but also to collect dust from the robot cleaner 200, wash the rag 242, and dry the rag 242.

### SEATING PART

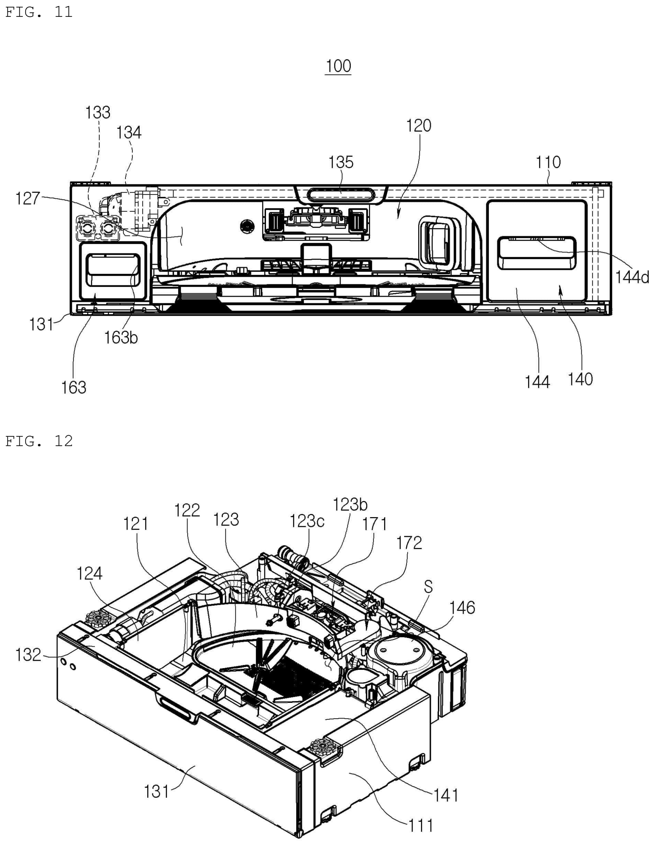

As illustrated in FIGS. 12 to 14, the robot cleaner station 100 may include the seating part 120.

The robot cleaner 200 and the robot cleaner station 100 may be connected through the seating part 120 in a physical, electrical, and/or flow path manner.

The seating part 120 may be disposed in the housing 110.

The inlet/outlet 127 into which the robot cleaner 200 is introduced may be formed at a front side of the seating part 120. The inlet/outlet 127 may refer to a space formed in the front surface of the robot cleaner station 100.

The inlet/outlet 127 may be sized to allow the robot cleaner 200 to pass therethrough. That is, a height of the inlet/outlet 127 is larger than a height of the robot cleaner 200. In this case, the inlet/outlet 127 may refer to a space formed upward in the vertical direction from a front end of the washing tub 121 to be described below. Alternatively, the inlet/outlet 127 may refer to a hole formed in a door frame 132 to be described below so that the robot cleaner 200 passes through the hole.

At least one of the dust collection part 140 and the rag washing part 160 may be disposed at the left and right sides of the inlet/outlet 127. Therefore, the left and right ends of the inlet/outlet 127 may define a boundary with the dust collection part 140 and the rag washing part 160.

In this case, the inlet/outlet 127 may be opened or closed by the door 131.

The seating part 120 may include an accommodation space S, the washing tub 121, a coupling wall 123, and inner walls 124.

The robot cleaner 200 may be accommodated in the accommodation space S of the seating part 120. For example, the accommodation space S may refer to a space surrounded by the washing tub 121, the coupling wall 123, and the inner walls 124. In another example, the accommodation space S may refer to a space surrounded by the washing tub 121, a washing plate 122, the coupling wall 123, and the inner walls 124. In still another example, the accommodation space S may refer to a space in which the robot cleaner 200 is positioned in a state in which the robot cleaner 200 is coupled to the electric power supply terminal 123b or a space in which the robot cleaner 200 is positioned in a state in which the dust bin 220 of the robot cleaner 200 communicates with a dust passage hole 123a.

The washing tub 121 may be configured to support the robot cleaner 200 in case that the robot cleaner 200 is coupled to the robot cleaner station 100. The wheel 260 of the robot cleaner 200 may come into contact with an upper surface of the washing tub 121. In addition, the auxiliary wheel 270 of the robot cleaner 200 may come into contact with the upper surface of the washing tub 121.

The washing tub 121 may include a washing tub main body 121a, an inclined portion 121b, a wheel coupling portion 121c, an agitator accommodation portion 121d, and a washing plate coupling part 128.

The washing tub main body 121a may define an overall external shape of the washing tub 121. The inclined portion 121b, the wheel coupling portion 121c, the agitator accommodation portion 121d, and the washing plate coupling part 128 may be disposed on the washing tub main body 121a.

The washing tub main body 121a may have a shape in which a length and width thereof in the horizontal direction are larger than a height thereof in the upward/downward direction. With this structure, the robot cleaner station 100 may be stably supported on the floor surface.

A return flow path may be provided in the washing tub main body 121a. Therefore, air discharged from the dust collection motor 145 may flow through a return flow path 125a formed in the washing tub main body 121a and be discharged to an air return port 125b.

The inclined portion 121b may be disposed in an inlet of the washing tub main body 121a on which the robot cleaner 200 climbs.

The inclined portion 121b may be inclined upward and forward in the direction in which the robot cleaner 200 enters. More specifically, a front end of the inclined portion 121b may be connected to the ground surface without a height difference and inclined upward and rearward. That is, the inclined portion 121b may be formed to be gradually raised from the ground surface when the robot cleaner 200 enters. Therefore, the robot cleaner 200 may easily climb from the ground surface to the robot cleaner station 100.

The inclined portion 121b may have wheel guide portions 121ba.

The wheel guide portion 121ba may be provided in the form of a groove to guide the movement of the robot cleaner 200 relative to the wheel 260. A surface of the wheel guide portion 121ba may be formed to correspond to a surface of the wheel 260 so that the robot cleaner 200 may stably travel. In addition, an inlet of the wheel guide portion 121ba on which the robot cleaner 200 climbs may be formed so that widths of grooves are larger than a width of the wheel 260, and the widths of the grooves may decrease in comparison with the inlet toward a front side of a climbing route of the robot cleaner 200. Therefore, the wheel 260 of the robot cleaner 200 may easily enter the robot cleaner station 100, and the leftward and rightward movements of the wheel 260 are restricted by the grooves having the widths that gradually decrease, such that the wheel 260 may be guided to an exact position.

The inclined portion 121b may have an auxiliary wheel guide portion 121bb.

The auxiliary wheel guide portion 121bb may be provided in the form of a groove in order to guide the movement of the robot cleaner 200 relative to the auxiliary wheel 270. In addition, the auxiliary wheel guide portion 121bb may be formed in a protruding shape so that the auxiliary wheel guide portion 121bb adjoins the auxiliary wheel 270 when the wheel 260 of the robot cleaner 200 is seated on the wheel guide portion 121ba. Therefore, when the robot cleaner 200 travels on the inclined portion 121b, the robot cleaner 200 may travel while being stably supported by the auxiliary wheel 270 as well as the wheels 260.

The wheels 260 of the robot cleaner 200 raised along the wheel guide portions 121ba may be seated on the wheel coupling portions 121c. When the wheel 260 of the robot cleaner 200 is seated on the wheel coupling portion 121c, the robot cleaner 200 and the robot cleaner station 100 may be physically coupled. The surface of the wheel coupling portion 121c may be formed to correspond to the surface of the wheel 260 so that the robot cleaner 200 may be stably stopped. The wheel coupling portion 121c may extend from an upper end of the wheel guide portion 121ba. The wheel coupling portion 121c may be connected to the wheel guide portion 121ba without a level difference. Therefore, the robot cleaner 200 may easily move to the wheel coupling portion 121c while passing over the inclined portion 121b.

The wheel coupling portions 121c may be disposed at stop positions of the left and right wheels 260 of the robot cleaner 200 so that the robot cleaner 200 is stopped at an exact position. In this case, the stop position of the wheel 260 refers to a position determined so that the robot cleaner 200 is stopped to be coupled to the electric power supply terminal 123b and/or a position determined so that the dust bin 220 of the robot cleaner 200 is stopped to communicate with the dust passage hole 123a.

A shape of the wheel coupling portion 121c may be a shape, i.e., an arcuate shape corresponding to a shape of the wheel 260 of the robot cleaner 200. With this configuration, the robot cleaner 200 may move along the wheel guide portion 121ba and be stopped at the same time when the wheel 260 is inserted into the wheel coupling portion 121c, and the wheel 260 may be stably seated on the wheel coupling portion 121c having an arcuate shape.

At least a part of the agitator 250 of the robot cleaner 200 may be accommodated in the agitator accommodation portion 121d.

The agitator accommodation portion 121d may be formed between the wheel coupling portions 121c. The agitator accommodation portion 121d may be formed in a shape corresponding to the agitator 250 of the robot cleaner 200. The agitator accommodation portion 121d may be formed in a rectangular parallelepiped shape opened at an upper side thereof. A lower surface of the agitator accommodation portion 121d may be sealed by a bottom surface of the washing tub main body 121a or a bottom surface of the housing 110. Therefore, the agitator 250 of the robot cleaner 200, which is moved upward along the inclined portion 121b, may be seated in a depressed portion 121da through the opened upper side of the agitator accommodation portion 121d. In this case, a depth of the depressed portion 121da may be smaller than a depth of the wheel coupling portion 121c.

The agitator accommodation portion 121d may be recessed in the washing tub main body 121a. Therefore, the agitator accommodation portion 121d may provide a space that accommodates a lower end of the agitator 250 in the state in which the wheels 260 of the robot cleaner 200 are seated on the wheel coupling portions 121c.

The air return port 125b may be formed in the agitator accommodation portion 121d. The air return port 125b may be formed in a lateral surface of the agitator accommodation portion 121d. The air return port 125b may connect a depressed portion 121da and the dust collection motor 145 through the return flow path. The depressed portion 121da and the return flow path may communicate with each other through the air return port 125b. Therefore, the air discharged from the dust collection motor 145 may pass through the air return port 125b and be discharged to the depressed portion 121da of the agitator accommodation portion 121d.

The agitator accommodation portion 121d may guide air, which is discharged through the air return port 125b, to the suction part 211 of the robot cleaner 200.

Meanwhile, the washing tub 121 may be provided to be withdrawable from both the housing 110 and the drawer 191. In this case, the washing tub 121 may be withdrawn while passing through the inlet/outlet 127 along a space between the inner walls 124.

In order to facilitate the withdrawal, the washing tub 121 may be formed with a base handle 121e.

The base handle 121e may be formed in a shape obtained by recessing the washing tub main body 121a from a rear side thereof toward a front lower side thereof. For example, the base handle 121e may be formed in the shape of an elliptical groove, a cover may be provided at a front side of the base handle 121e, and a rear side of the base handle 121e is open.

With this configuration, the user may easily withdraw the washing tub 121 by holding and pulling the handle 121e.

The coupling wall 123 is a component in which the dust passage hole 123a, the electric power supply terminal 123b, and a water supply nozzle 123c of the robot cleaner station 100 are disposed. The coupling wall 123 may spatially distinguish the accommodation space S from components of the robot cleaner station 100. The coupling wall 123 may extend in the vertical direction from a rear side of the washing tub 121. The coupling wall 123 may be formed to correspond to a shape of the robot cleaner 200. For example, in case that the body 210 of the robot cleaner 200 has a cylindrical shape, the coupling wall 123 may be formed in a circular arc shape having a predetermined radius. With this configuration, it is possible to increase an area that may surround an outer periphery of the robot cleaner 200 and face the outer surface of the robot cleaner 200. In addition, the robot cleaner 200 may be stably supported.

The seating part 120 may be formed with the dust passage hole 123a through which air existing outside the housing 110 may be introduced into the housing 110. Specifically, the dust passage hole 123a may be formed in the coupling wall 123 so that outside air may be introduced into the housing 110. In this case, the dust passage hole 123a may be disposed at a rear side of the dust collection part housing 141 to be described below.

The dust passage hole 123a may communicate with the dust bin 220 of the robot cleaner 200. The dust passage hole 123a may communicate with the dust discharge port 221 of the dust bin 220 of the robot cleaner 200. The dust passage hole 123a may be formed in the form of a hole corresponding to a shape of the dust bin 220 so that the dust in the dust bin 220 may be introduced into the dust collection part 140.

The dust passage hole 123a may be formed to communicate with dust collection flow paths 147 and 148. The air sucked into the dust passage hole 123a may flow along the dust collection flow paths 147 and 148 and then be discharged through an air return part 125.

The robot cleaner station 100 may include an electric power supply module configured to supply electric power to the robot cleaner 200. The electric power supply module may include an electric power supply module housing and the electric power supply terminal 123b, and a circuit board and an element for supplying electric power may be mounted in the electric power supply module housing. Further, the electric power supply terminal 123b may be disposed forward in the electric power supply module housing and disposed on the coupling wall 123 so as to be exposed.

The electric power supply terminal 123b may supply electric power to the robot cleaner 200 coupled to the seating part 120. The electric power supply terminal 123b may come into contact with and be electrically connected to the charging terminal of the robot cleaner 200. The electric power supply terminal 123b may be disposed on the seating part 120. Specifically, the electric power supply terminal 123b may be disposed on the coupling wall 123. The electric power supply terminal 123b may be electrically connected to the robot cleaner 200 coupled to the coupling wall 123. The electric power supply terminal 123b may supply electric power to the battery of the robot cleaner 200 coupled to the coupling wall 123.

The robot cleaner station 100 may further include the water supply nozzle 123c.

The water supply nozzle 123c may be connected to the supply part 231 of the water container 230 of the robot cleaner 200. Specifically, the water supply nozzle 123c may be connected to the injection port of the water container 230. The water supply nozzle 123c may supply water, which is supplied from the water supply pipe of the kitchen cabinet 2, to a storage space in the water container 230 of the robot cleaner 200.

The inner walls 124 is configured to spatially distinguish the accommodation space S of the seating part 120 from the components of the robot cleaner station 100. The inner walls 124 may be provided as a pair of inner walls 124 disposed at the left and right sides of the washing tub 121. The inner walls 124 may be connected to two opposite ends of the coupling wall 123. The inner walls 124 may extend from the left and right sides of the washing tub 121 in a direction intersecting the washing tub 121. Specifically, the inner walls 124 may extend from the left and right sides of the washing tub 121 in the vertical direction.

Meanwhile, various types of components, such as the dust collection flow paths 147 and 148, the dust collection part 140, the dust collection motor 145, the detergent container 163, and a wastewater container 164 may be disposed outside the inner wall 124. Specifically, the dust collection part 140, the detergent container 163, and the wastewater container 164 may be disposed in a space between the inner wall 124 and the outer wall 111 of the housing 110.

The dust collection part 140 and the detergent container 163 may be separated in a sliding manner from the space between the inner wall 124 and the outer wall 111 of the housing 110. Widths of the dust collection part 140 and the detergent container 163 in the leftward/rightward direction may be smaller than a distance between the inner wall 124 and the outer wall 111 of the housing 110.

The washing plate 122 may be configured to wash the rag of the robot cleaner 200, and the washing plate 122 may be seated on the washing plate coupling part 128 of the washing tub 121. In addition, the washing plate 122 may come into contact with the rag 242 in the state in which the robot cleaner 200 is seated.

The washing plate 122 may be a plate inclined downward toward a central portion thereof as a whole.

Specifically, the washing plate 122 includes a flow guide surface 122c formed as a curved surface. Further, one or more passing holes 122b through which the fluid may pass may be formed in the flow guide surface 122c. In addition, washing protrusions 122a may protrude from the flow guide surface 122c.

In this case, the washing protrusions 122a may be provided as a pair of washing protrusions 122a symmetrically formed on the flow guide surface 122c. Specifically, the pair of washing protrusions 122a may be disposed vertically below the pair of rags 242 of the robot cleaner 200 and disposed to face the pair of rags 242. The pair of washing protrusions 122a may be disposed to at least partially come into contact with the pair of rags 242.

Further, the passing holes 122b may be provided as a plurality of passing holes 122b formed in the flow guide surface 122c and formed between the pair of washing protrusions 122a. For example, the plurality of passing holes 122b may be formed while including positions on the flow guide surface 122c that have the lowest heights from the ground surface (the floor of the kitchen), and the plurality of passing holes 122b may be formed between the pair of washing protrusions 122a. Therefore, the fluid discharged between the pair of washing protrusions 122a may flow while being guided to the passing holes 122b.

Meanwhile, a height of the flow guide surface 122c from the floor of the kitchen may increase rearward from the position at which the passing holes 122b are formed. That is, the height of the flow guide surface 122c from the floor of the kitchen may increase as the distance from an outside air discharge part 171c to be described below decreases.

With this configuration, the washing water and/or air may flow along the flow guide surface 122c and enter a space formed between the washing plate 122 and the washing plate coupling part 128 through the passing holes 122b.

When the washing water is supplied to the washing plate 122 and the rag 242 rotates, the rag 242 may be washed by friction with the washing protrusions 122a provided in a stationary state.

Meanwhile, at least a part of the washing plate 122 may be disposed above a flow path forming portion 128c to be described below. That is, the washing plate 122 may further include a return flow path cover portion 122d protruding upward from the flow guide surface 122c and coupled to an upper side of the flow path forming portion 128c.

The washing plate 122 of the present embodiment may be formed in a shape corresponding to a shape of the flow path forming portion 128c. For example, a front left portion of the washing plate 122 may protrude upward from the flow guide surface 122c and cover the flow path forming portion 128c disposed therebelow.

With this configuration, the washing plate 122 and the washing plate coupling part 128 may be accurately coupled while simultaneously providing a sufficient space in which the return flow path 125a may be formed.

The washing plate coupling part 128 is a component on which the washing plate 122 is seated. The washing plate coupling part 128 may be disposed rearward of the washing tub main body 121a. The washing plate coupling part 128 may be disposed below the washing plate 122 and detachably coupled to the washing plate 122. The washing plate coupling part 128 may be formed to correspond to the washing plate 122 so as to be fitted with the washing plate 122. The liquid passing through the washing plate 122 may be introduced into the washing plate coupling part 128.

The washing plate coupling part 128 may include a washing tub base surface 128a along which the fluid having passed through the washing plate 122 flows, and a washing tub wall 128b extending and protruding in the vertical direction from an outer periphery of the washing tub base surface 128a. In this case, a height of the washing tub base surface 128a from the ground surface (the floor of the kitchen) may decrease toward the rear side of the robot cleaner station 100. Therefore, the fluid having passed through the washing plate 122 may be collected at a rear side of the washing plate coupling part 128 and discharged to the outside through a wastewater inlet port 164c to be described below.

In this case, a wastewater pipe connection port 128d may be formed in the washing tub wall 128b so as to be coupled to the wastewater inlet port 164c.

Meanwhile, the washing plate coupling part 128 may be formed with the flow path forming portion 128c. The flow path forming portion 128c may protrude upward from the washing tub base surface 128a and form the return flow path 125a therebelow. Specifically, at least a part of the return flow path 125a may be formed between a lower surface of the washing tub 121 and the flow path forming portion 128c.

Meanwhile, the washing plate coupling part 128 according to the present invention may be configured to be withdrawable from the rag washing part 160. That is, the washing plate coupling part 128, together with the washing tub 121, may be withdrawn from the housing 110. In addition, the washing plate 122 may also be withdrawn from the rag washing part 160.

### DOOR PART

The door part 130 may be provided to cover an entire front end of the housing 110. The door 131 may cover the dust bag drawer 144 and the detergent container 163 so that the dust bag drawer 144 and the detergent container 163 are not exposed to the outside.

The door 131 may form a front external appearance of the robot cleaner station 100 in a state in which the inlet/outlet 127 is closed. For example, the door 131 may be formed in a shape similar to a rectangular flat plate-like shape. A length of the door 131 in the leftward/rightward direction may be equal to or longer than a length of the housing 110 in the leftward/rightward direction. With this configuration, the dust bag drawer 144 and the detergent container 163 may be protected from the outside, and a neat external appearance of the robot cleaner station 100 may be implemented.

The door frame 132 may be disposed at a front side of the housing 110. The door 131 may be openably and closably coupled to the door frame 132. In addition, the door frame 132 may be formed with a dust bag withdrawal port 132a to which the dust bag drawer 144 and the inlet/outlet 127, through which the robot cleaner 200 may enter or exit, are coupled to be withdrawable, and a detergent container insertion port 132b to which the detergent container 163 is coupled to be withdrawable.

The door frame 132 may define a front external appearance of the robot cleaner station 100 in the state in which the door 131 is open.

At least one surface of the dust bag drawer 144, which is coupled to the door frame 132, and at least one surface of the detergent container 163 may be provided to be exposed to the outside in the state in which the door 131 opens the inlet/outlet 127. When the door 131 opens the inlet/outlet 127, a front surface of the dust bag drawer 144 and a front surface of the detergent container 163 are exposed to the outside, and a handle 144d of the dust bag drawer 144 and a handle 163b of the detergent container 163 are exposed to the outside. With this configuration, the dust bag drawer 144 and the detergent container 163 are easily extracted or retracted, and a neat external appearance may be provided.

A rotary shaft 131a of the door 131 may be disposed at a lower end of the door frame 132. When the inlet/outlet 127 is open, the door 131 may be disposed in parallel with the floor surface or inclined downward and forward, such that an end thereof may come into contact with the ground surface.

The door 131 may be provided with a hinge part and be rotatably connected to the door frame 132. The hinge part may be provided as a plurality of hinge parts disposed along the rotary shaft 131a and spaced apart from one another at different intervals.

In addition, auxiliary entry paths 131b may be provided on a surface of the door 131 that faces the housing 110 when the inlet/outlet 127 is closed. The auxiliary entry paths 131b may be provided to allow the robot cleaner 200 to stably travel to the seating part 120 or the inlet/outlet 127, and the auxiliary entry paths 131b may be provided to be inclined upward and rearward.

Specifically, the auxiliary entry paths 131b may be formed in the shape of grooves to allow the robot cleaner 200 to stably travel inclinedly. The auxiliary entry paths 131b may be configured such that the grooves formed in the leftward/rightward direction are disposed to be spaced apart from one another at equal intervals in a forward/rearward direction. The auxiliary entry path 131b may be formed such that a width thereof decreases rearward in the leftward/rightward direction. Therefore, the wheel 260 of the robot cleaner 200 may be guided to the exact position while the leftward and rightward movements of the wheel 260 are restricted as the wheel 260 travels toward the seating part 120 or the inlet/outlet 127.

The auxiliary entry paths 131b guide the wheel 260 to the wheel guide portions 121ba disposed on the seating part 120. The auxiliary entry paths 131b may be provided as a pair of auxiliary entry paths 131b respectively disposed at positions connected to the pair of wheel guide portions 121ba.

Meanwhile, the door 131 may operate in accordance with whether the robot cleaner 200 approaches, whether the robot cleaner 200 begins to travel, or the like. Alternatively, the door 131 may operate in response to an input applied to a door manipulation part 133.

An entry sensor 135 may be installed on the door frame 132 and recognize the approach of the robot cleaner 200. The entry sensor 135 may be disposed at the front side of the housing 110 to recognize the approach of the robot cleaner 200. For example, the entry sensor 135 may be an IR sensor.

The entry sensor 135 may be installed at an upper side of a front surface of the door frame 132. Therefore, it is possible to maximize a detection range. In addition, the entry sensor 135 may be installed at a central portion of the inlet/outlet 127 based on the leftward/rightward direction. Therefore, an entry direction of the robot cleaner 200 may be guided in accordance with communication with the robot cleaner 200.

Meanwhile, the door 131 may be formed in a shape in which a portion facing the entry sensor 135 is cut out so that the entry sensor 135 may detect a front location even in the state in which the door 131 closes the inlet/outlet 127. Alternatively, the door 131 may be provided with a transparent window provided at a position that faces the entry sensor 135.

The door manipulation part 133 may be installed on the door frame 132, and the user may rotate the door 131 by manipulating the door manipulation part 133.

The door manipulation part 133 may be provided with at least one button disposed on the door frame 132 and configured to operate the door 131. The door manipulation part 133 may rotate the door 131 regardless of a position or state of the robot cleaner 200. The door manipulation part 133 may have one button configured to open or close the door 131 or have a button configured to open the door 131, and a button configured to close the door 131.

The door manipulation part 133 may be disposed in the door frame 132. Further, at least one button of the door manipulation part 133 may be disposed to be exposed to the outside.

In this case, the button may be disposed adjacent to the detergent container 163 based on the inlet/outlet. For example, the button may be disposed above the handle 163b of the detergent container 163.

Meanwhile, when the door 131 closes the inlet/outlet 127, the door 131 also covers the door manipulation part 133. In this case, external button parts 131c are provided on the door 131 so that the door manipulation part 133 may be manipulated even in the state in which the inlet/outlet 127 is closed. The external button parts 131c are configured to be equal in number to the buttons of the door manipulation part 133 and provided at positions facing the buttons. The external button part 131c may be made of an elastically deformable material and configured to press the button when an external force is applied.

The door 131 may be rotated by a door driving part 134. For example, the door driving part 134 may include a door driving motor and a driving gear part.

The door driving motor may be disposed in the housing 110 and disposed in an upper space of the detergent container 163. The door driving motor may be disposed between the detergent container 163 and the upper cover 113 of the housing 110. In addition, the door driving motor may be disposed at a front side of a space provided between the outer wall 111 and the seating part 120. That is, the door driving motor may be disposed adjacent to the door manipulation part 133.

Therefore, the spatial utilization and accessibility are improved, thereby providing convenience to the user.

The driving gear part is configured to connect the door driving motor and the door 131 and transmit power. The driving gear part rotates the door 131 by transmitting driving power from the door driving motor to the door 131.

### DUST COLLECTION PART

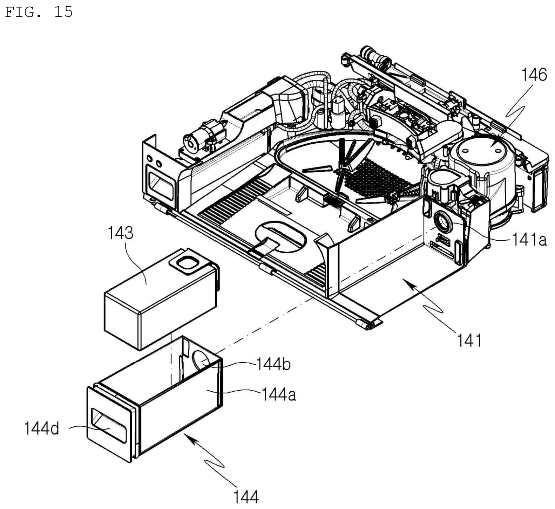

FIG 15 is a view for explaining the dust collection part of the robot cleaner station according to the embodiment of the present invention.

The dust collecting part 140 will be described below with reference to FIG. 15.

The dust collection part 140 may collect dust from the dust bin 220 of the robot cleaner 200. The dust collection part 140 may be disposed in the housing 110. The dust collection part 140 may be disposed outside the seating part 120. That is, the dust collection part 140 may be disposed between the housing 110 and the seating part 120. For example, the dust collection part 140 may be disposed at one side of the seating part 120 based on leftward/rightward direction.

The dust collection part 140 may include the dust collection part housing 141, a filter 142, a dust bag 143, the dust bag drawer 144, the dust collection motor 145, a dust collection motor housing 146, a first dust collection flow path 147, and a second dust collection flow path 148.

The dust collection part housing 141 may form a space in which the filter 142, the dust bag 143, and the dust bag drawer 144 may be accommodated.

The dust bag drawer 144, which may be withdrawn, may be coupled in the dust collection part housing 141, and the dust bag 143 may be accommodated in the dust bag drawer 144. For example, the dust collection part housing 141 may be provided in the form of a rectangular tube opened at a front side thereof, and a rear internal space may communicate with the first dust collection flow path 147 and the second dust collection flow path 148.

Dust in the dust bin 220 may be introduced into the dust collection part housing 141.

One side of the inside of the dust collection part housing 141 may communicate with the first dust collection flow path 147, and the other side of the inside of the dust collection part housing 141 may communicate with the second dust collection flow path 148. In addition, when the dust bag 143 is coupled to the dust collection part housing 141, the dust bag 143 may be disposed in the dust collection part housing 141 and communicate with the first dust collection flow path 147.

Specifically, the dust collection part housing 141 may be formed with an inlet port 141a configured to communicate with the first dust collection flow path 147, and an outlet port 141b configured to communicate with the second dust collection flow path 148.

In this case, the inlet port 141a may be disposed above the outlet port 141b. Therefore, the air and dust introduced through the inlet port 141a may flow downward, and the dust may be trapped in the dust bag 143 and then discharged through the outlet port 141b. The air flows from above to below during this process, which may prevent the air from reversely flowing upward or prevent dust from scattering upward.

Meanwhile, in the present embodiment, the outlet port 141b may be disposed forward of the inlet port 141a. For example, the inlet port 141a may be formed in a rear surface of the dust collection part housing 141, and the outlet port 141b may be formed in a lower surface of the dust collection part housing 141. In this case, the outlet port 141b may be disposed forward of the rear surface of the dust collection part housing 141.

Meanwhile, the outlet port 141b may be formed by coupling the dust collection part housing 141 and the dust bag drawer 144. In this case, the outlet port 141b of the dust collection part housing 141 and an outlet port 144c of the dust bag drawer 144 may refer to the same space.

Meanwhile, the dust collection part housing 141 may be provided with a dust bag detection part 141c. The dust bag detection part 141c may be disposed on the rear surface of the dust collection part housing 141. The dust bag detection part 141c may be disposed on the rear surface of the dust collection part housing 141 and disposed in a direction toward the dust bag drawer 144.

The dust bag detection part 141c may detect the dust bag 143. For example, the dust bag detection part 141c may be a micro-switch. The dust bag detection part 141c may come into contact with the dust bag 143 to detect the presence or absence of the dust bag 143. Specifically, the dust bag detection part 141c may come into contact with an attachment/detachment part 143b of the dust bag 143 to detect the presence or absence of the dust bag 143.

According to the present invention, the dust collection part housing may be provided with the dust bag detection part 141c, and the dust bag detection part 141c may detect that the dust bag 143 is mounted when the dust bag 143 is coupled.

Meanwhile, a sterilization module 150 may be coupled to the dust collection part housing 141. For example, the dust collection part housing 141 may be formed with a hot air inlet port through which hot air is introduced from the sterilization module 150, and a hot air outlet port through which hot air is discharged. In this case, the hot air inlet port and the hot air outlet port may be formed in the rear surface of the dust collection part housing 141 and respectively disposed at two opposite sides of the rear surface of the dust collection part housing 141 based on the leftward/rightward direction. In addition, the hot air inlet port may be disposed to be closer to the ground surface than the hot air outlet port to the ground surface. That is, the hot air inlet port and the hot air outlet port may be disposed at diagonal positions on the rear surface of the dust collection part housing 141 that is a quadrangular surface. Therefore, it is possible to maximize a distance of a flow path of hot air.

In another example, the sterilization module 150 may be coupled to an upper surface of the dust collection part housing 141 and emit rays into the dust collection part housing 141. In this case, the rays may be ultraviolet rays (UV-C).

The dust bag 143 may refer to a dust collection bag configured to collect dust sucked from the interior of the dust bin 220 of the robot cleaner 200 by the dust collection motor 145.

The dust bag 143 may be detachably coupled to the dust bag drawer 144.

In this case, the dust bag drawer 144 may be coupled to be withdrawn from the dust collection part housing 141 in a first direction, and the dust bag 143 may be detachably coupled to the dust bag drawer 144 in a second direction intersecting the first direction. For example, the dust bag drawer 144 may be coupled to be withdrawn from the dust collection part housing 141 in the forward/rearward direction, and the dust bag 143 may be detachably coupled to the dust bag drawer 144 in the upward/downward direction.

The dust bag 143 may be separated from the dust bag drawer 144 and discarded, and a new dust bag 143 may be coupled to the dust bag drawer 144. That is, the dust bag 143 may be defined as a consumable component.

The dust collection part 140 may further include a dust collection module. The dust collection module may provide a suction gas flow to the dust collection flow path.

Specifically, the dust collection part 140 may further include the dust collection motor 145 and the dust collection motor housing 146.

The dust collection motor 145 may generate a suction force in the dust collection flow paths 147 and 148. That is, the dust collection motor 145 may provide a suction force that sucks the dust in the dust bin 220 into the dust bag 143 disposed in the dust collection part housing 141.

The dust collection motor 145 may be disposed rearward of the dust collection part housing 141. Therefore, the dust collection motor 145 may provide a suction force capable of sucking dust in the dust bin 220 of the robot cleaner 200.

The dust collection motor 145 may generate the suction force by means of the rotation. For example, although not illustrated, the dust collection motor 145 may include a rotor and a stator that perform a relative rotation by receiving electric power, and the dust collection motor 145 may include an impeller configured to be rotated about a rotary shaft by the rotation of the rotor. Therefore, the suction force may be generated by the rotation of the impeller.

One side of the dust collection motor 145 may be connected to the second dust collection flow path 148, and the other side of the dust collection motor 145 may be connected to the return flow path 125a. In case that the dust collection motor 145 operates, the air flowing through the second dust collection flow path 148 may be introduced into the dust collection motor housing 146. In addition, the air introduced into the dust collection motor housing 146 may pass through the dust collection motor 145 and then flow through the return flow path 125a.

Meanwhile, in the present embodiment, a rotary shaft of the dust collection motor 145 may be disposed in the vertical direction. In this case, it is possible to minimize a horizontal space occupied by the dust collection motor 145.

Meanwhile, in case that the rotary shaft of the dust collection motor 145 is disposed in the vertical direction, a side at which the air is introduced into the dust collection motor 145 and a side at which the air is discharged from the dust collection motor 145 may be disposed at different heights. Therefore, a structure of the dust collection motor housing 146 may be formed.

The dust collection motor 145 may be accommodated in the dust collection motor housing 146. The dust collection motor housing 146 may be disposed rearward of the dust collection part housing 141. In addition, the dust collection motor housing 146 may be disposed rearward of the first dust collection flow path 147. In addition, the dust collection motor housing 146 may be disposed rearward of the second dust collection flow path 148.

That is, based on the forward/rearward direction of the robot cleaner station 100, the dust collection part housing 141 may be disposed at a foremost side, and the first dust collection flow path 147 and the second dust collection flow path 148 may be disposed rearward of the dust collection part housing 141. In addition, the dust passage hole 123a may be disposed rearward of the first dust collection flow path 147, and the dust collection motor housing 146 may be disposed rearward of the second dust collection flow path 148. In addition, the dust collection motor housing 146 may be disposed rearward of the dust passage hole 123a.

Therefore, the dust collection part 140 may be disposed in the forward/rearward direction of the robot cleaner station 100, as a whole, thereby reducing an overall height.

In the present embodiment, the dust collection motor housing 146 includes an upper dust collection motor housing 146a, a lower dust collection motor housing 146b, a dust collection motor support portion 146c, and a motor damper 146d.

In this case, the dust collection motor 145 may be seated on the dust collection motor support portion 146c, the upper dust collection motor housing 146a may be coupled to an upper side of the dust collection motor support portion 146c, and the lower dust collection motor housing 146b may be disposed below the dust collection motor 145. Meanwhile, the motor damper 146d may be coupled between the dust collection motor support portion 146c and the upper dust collection motor housing 146a.

With this arrangement, after the motor damper 146d is coupled in the state in which the dust collection motor 145 is seated on the dust collection motor support portion 146c, the upper dust collection motor housing 146a may be assembled, and the lower dust collection motor housing 146b may be assembled to a lower surface of the housing 110.

Therefore, the components of the dust collection motor housing 146 may be assembled to the upper and lower sides of the dust collection motor 145, thereby facilitating the assembling and repairing processes.

The upper dust collection motor housing 146a may cover an upper side of the dust collection motor 145. The upper dust collection motor housing 146a may include a motor accommodation portion configured to accommodate a part of the upper side of the dust collection motor 145, and an upper flow path forming portion connected to the motor accommodation portion and having a flow path formed therein.

The motor accommodation portion may be formed in a shape similar to a cylindrical shape closed at an upper end thereof. The air discharged from the dust collection motor 145 may flow to a space between the motor accommodation portion and the dust collection motor 145 and be discharged to the upper flow path forming portion.

The upper flow path forming portion may extend radially outward from an outer peripheral surface of the motor accommodation portion. Therefore, it is possible to guide a flow direction of the air discharged from a portion between the motor accommodation portion and the dust collection motor 145. In addition, an upper surface of the upper flow path forming portion may be formed with a groove to accommodate at least a part of a pipe or hose that forms the first dust collection flow path 147.

With this configuration, at least a part of the first dust collection flow path 147 may pass through an upper side of the upper flow path forming portion.

The upper flow path forming portion may form therein at least a part of the return flow path 125a. Specifically, the space formed by coupling the upper flow path forming portion and the dust collection motor support portion 146c may form a part of the return flow path 125a.

The lower dust collection motor housing 146b may cover a lower side of the dust collection motor 145. The lower dust collection motor housing 146b may be coupled to a lower surface of the drawer 190. The lower dust collection motor housing 146b may include a lower cover part disposed below the dust collection motor 145, and a lower flow path forming portion connected to the lower cover part and configured to form a flow path of air to be introduced into the dust collection motor 145.

The lower cover part may be formed in the shape of a circular plate and formed in a shape in which a central portion of a circle is ridged toward the dust collection motor 145. With this configuration, it is possible to guide an ascending flow of air to be introduced into the dust collection motor 145.

The lower flow path forming portion may extend radially outward from the lower cover part. Therefore, it is possible to guide a flow of air to be introduced into the dust collection motor 145 from the dust collection part housing 141.

The lower flow path forming portion may form therein at least a part of the second dust collection flow path 148. Specifically, a space formed by coupling the lower flow path forming portion and the dust collection motor support portion 146c may form a part of the second dust collection flow path 148.

The dust collection motor support portion 146c may support the dust collection motor 145.

The dust collection motor support portion 146c may be connected to various components that form the internal structure of the robot cleaner station 100. The dust collection motor support portion 146c may be connected to the dust collection part housing 141. The dust collection motor support portion 146c may be connected to the inner wall 124 or the coupling wall 123 of the seating part 120. Therefore, the dust collection motor support portion 146c may provide a supporting force for supporting the dust collection motor 145.

The dust collection motor support portion 146c may be coupled to the upper dust collection motor housing 146a and the lower dust collection motor housing 146b and form the return flow path 125a and the second dust collection flow path 148. Specifically, the second dust collection flow path 148 may be formed below the dust collection motor support portion 146c, and the return flow path 125a may be formed above the dust collection motor support portion 146c.

Therefore, the plurality of flow paths may be disposed to be stacked on one another, thereby maximizing spatial efficiency within a limited height range.

According to the above-mentioned arrangement result, the air introduced from the interior of the dust bin 220 may be introduced into the dust collection motor 145 while passing between the dust collection motor support portion 146c and the lower dust collection motor housing 146b and discharged between the dust collection motor support portion 146c and the upper dust collection motor housing 146a while passing through the dust collection motor 145.

Therefore, according to the present invention, the dust collection motor 145 may be disposed in the vertical direction, and two flow paths, which are separated in the upward/downward direction, may be formed by the dust collection motor support portion 146c. Therefore, the flow paths, which are required to collect dust, may be disposed to be stacked on one another at a limited height and within limited left and right spaces, and the stacked flow paths may be used to introduce and discharge air, thereby maximizing spatial efficiency.

Meanwhile, the motor damper 146d may be coupled between the dust collection motor support portion 146c and the dust collection motor 145 and elastically support the dust collection motor 145.

The motor damper 146d may be coupled between the dust collection motor support portion 146c and the upper dust collection motor housing 146a. That is, an upper side of the motor damper 146d may be coupled to the upper dust collection motor housing 146a, and a lower side of the motor damper 146d may be coupled to the dust collection motor support portion 146c. With this configuration, when the dust collection motor support portion 146c and the upper dust collection motor housing 146a are coupled, the motor damper 146d may be fixed between the dust collection motor support portion 146c and the upper dust collection motor housing 146a, thereby ensuring a supporting force.

Meanwhile, the motor damper 146d may be made of a material having elasticity.

Therefore, according to the present invention, because the dust collection motor 145 is disposed in the vertical direction, a damper 146d may be provided below the dust collection motor 145, thereby reducing vibration and noise occurring due to the operation of the dust collection motor 145.

Therefore, according to the present invention, the damper 146d may seal the return flow path 125a formed between the dust collection motor support portion 146c and the upper dust collection motor housing 146a, thereby preventing air leakage.

Meanwhile, the dust collection part 140 may further include the dust collection flow paths 147 and 148. The dust collection flow path may refer to a flow path through which the air sucked through the dust passage hole 123a flows to the dust collection motor 145 via the dust bag.

Specifically, the dust collection flow path may include the first dust collection flow path 147 configured to allow the dust bin 220 and an internal space of the dust collection part housing 141 to communicate with each other when the robot cleaner 200 is coupled to the robot cleaner station 100 and the dust passage hole 123a and the dust bin 220 of the robot cleaner 200 communicate with each other, and the second dust collection flow path 148 configured to allow the internal space of the dust collection part housing 141 and an internal space of the dust collection motor housing 146 to communicate with each other.

The first dust collection flow path 147 may connect the dust bin 220 of the robot cleaner 200 and the internal space of the dust collection part housing 141. The first dust collection flow path 147 may connect the dust passage hole 123a of the seating part 120 and the internal space of the dust collection part housing 141. The first dust collection flow path 147 may be formed in a direction intersecting the vertical direction. For example, the first dust collection flow path 147 may be formed to be close to the horizontal direction. The first dust collection flow path 147 may be a space formed rearward of the dust passage hole 123a. The first dust collection flow path 147 may be a flow path bent laterally from the dust passage hole 123a, and the dust and the air may flow through the first dust collection flow path 147. The dust in the dust bin 220 of the robot cleaner 200 may move to the internal space of the dust collection part housing 141 through the first dust collection flow path 147.

The second dust collection flow path 148 may connect the internal space of the dust collection part housing 141 and the internal space of the dust collection motor housing 146. The second dust collection flow path 148 may be formed in a direction intersecting the vertical direction. For example, the second dust collection flow path 148 may be formed to be close to the horizontal direction.

In this case, in the present invention, the first dust collection flow path 147 and the second dust collection flow path 148 may be formed at different heights. That is, the first dust collection flow path 147 and the second dust collection flow path 148 may be disposed as layered structures. At least a part of the first dust collection flow path 147 may be disposed above the second dust collection flow path 148.

With this configuration, the plurality of flow paths may be disposed to be close to the horizontal direction, thereby reducing an overall height, and simultaneously, the plurality of flow paths may be stacked, thereby minimizing an overall volume and width of the robot cleaner station 100 in the leftward/rightward direction.

An air return part 125 may guide the air, which is discharged from the dust collection motor 145, to the robot cleaner 200.

The air return part 125 may include the return flow path 125a and the air return port 125b.

The return flow path 125a may provide a flow path in which the air discharged from the dust collection motor 145 flows. The return flow path 125a may be formed by the dust collection motor housing 146 and the washing tub 121. Specifically, one side of the return flow path 125a may be a space formed by coupling the dust collection motor support portion 146c and the upper dust collection motor housing 146a. In addition, the other side of the return flow path 125a may be disposed in the washing tub main body 121a. For example, the return flow path 125a may be a space formed between upper and lower surfaces of the washing tub main body 121a.

Therefore, one side of the return flow path 125a may pass through the dust collection motor housing 146. In addition, the other side of the return flow path 125a may pass through a lower side of the washing tub 121. In addition, at least a part of the return flow path 125a may be disposed below the robot cleaner 200 seated on an upper side of the washing tub main body 121a.

The return flow path 125a may be connected to the dust collection motor 145 in a flow path manner. One end of the return flow path 125a may communicate with the internal space of the dust collection motor housing 146, and the other end of the return flow path 125a may communicate with the air return port 125b.

The return flow path 125a may be a flow path formed in a direction intersecting the vertical direction. For example, the return flow path 125a may be a flow path formed in the horizontal direction in the housing 110.

In this case, at least a part of the return flow path 125a may be disposed below the first dust collection flow path 147. That is, the return flow path 125a may be disposed to pass through a lower side of the first dust collection flow path 147. Therefore, a flow direction of the air flowing through the first dust collection flow path 147 and a flow direction of the air flowing through the return flow path 125a may intersect each other on a horizontal plane.

In addition, at least a part of the return flow path 125a may be disposed above the second dust collection flow path 148. That is, the return flow path 125a may be disposed to pass through an upper side of the second dust collection flow path 148.

Therefore, the first dust collection flow path 147, the second dust collection flow path 148, and the return flow path 125a may be disposed (stacked) in the upward/downward direction within a limited height range, thereby maximizing spatial efficiency.

In addition, the return flow path 125a may be formed by utilizing a surplus space in the washing tub 121, thereby preventing an increase in height of the robot cleaner station 100. A separate space in which a flow path is formed is not required, which may maximize spatial efficiency.

The air return port 125b may be formed in the washing tub 121. The air return port 125b may be formed in the agitator accommodation portion 121d. In this case, the suction part 211 of the robot cleaner 200 may be disposed above the agitator accommodation portion 121d. Therefore, the return flow path 125a may discharge air to a lower side of the suction part 211, and the air having passed through the return flow path 125a may be introduced into the suction part 211 disposed immediately above the return flow path 125a.

Therefore, the return flow path 125a according to the embodiment of the present invention may guide the air, which is discharged from the dust collection motor 145, to the suction part 211 of the robot cleaner 200.

The return flow path 125a guides the air, which is discharged from the dust collection motor 145, to the suction part 211 of the robot cleaner 200 without discharging the air to the outside, thereby implementing a structure in which the air continuously circulates between the robot cleaner 200 and the robot cleaner station 100. Therefore, hot air discharged from the dust collection motor 145 may be introduced back into the robot cleaner 200 and circulate without being discharged to the kitchen cabinet 2, thereby preventing damage to the interior of the kitchen cabinet 2.

The air having passed through the dust collection motor 145 may be discharged to the accommodation space S through the air return port 125b, and the air discharged to the accommodation space S may be introduced back into the suction part 211 by the suction force of the dust collection motor 145. Therefore, the air sucked from the dust bin 220 by the suction force of the dust collection motor 145 may sequentially flow through the dust passage hole 123a, the first dust collection flow path 147, the dust collection part housing 141, the second dust collection flow path 148, the dust collection motor 145, the return flow path 125a, and the air return port 125b and then be discharged to the accommodation space S.

In this case, the dust collection motor 145 may operate together with the suction motor (not illustrated) of the robot cleaner 200 when the suction motor (not illustrated) of the robot cleaner 200 operates. The air discharged through the air return port 125b may be sucked into the suction part 211 by the suction force of the suction motor (not illustrated) as well as the suction force of the dust collection motor 145, thereby improving dust collection efficiency.

### STERILIZATION MODULE

The robot cleaner station 100 according to the embodiment of the present invention may further include the sterilization module 150. The sterilization module 150 may be coupled to the dust collection part housing 141.

In the robot cleaner station 100 according to the embodiment of the present invention, the sterilization module 150 may sterilize the dust bag 143. Specifically, the sterilization module 150 may emit light toward the dust bag 143.

The sterilization module 150 may include a light source configured to emit sterilization light, and a protection panel disposed below the light source and configured to protect the light source.

In this case, the light source may include one or more light-emitting diodes (LEDs) capable of emitting the sterilization light having sterilizing power for removing bacteria. The sterilization light emitted from the light source may have a wavelength that varies depending on types of light-emitting diodes.

For example, the light source may be a light-emitting diode that emits ultraviolet rays within UV-C wavelength ranges. The ultraviolet rays are divided into UV-A rays (315 nm to 400 nm), UV-B rays (280 nm to 315 nm), and UV-C rays (200 nm to 280 nm) based on the wavelengths. The ultraviolet ray in the UV-C region may inhibit the proliferation of microorganisms by damaging DNA double helices of the microorganisms.

Meanwhile, the sterilization module 150 may be disposed on an upper surface of an interior of the dust collection part housing 141. The sterilization module 150 may emit light downward. Therefore, because dust may settle downward due to gravity even though the dust is present in the dust bag 143, the light may be emitted to the interior of the dust bag 143 without being affected by the presence of the dust.

Meanwhile, the sterilization module 150 according to another embodiment of the present invention may supply hot air to the dust bag 143.

The sterilization module 150 may include a fan configured to generate a flow force to air, a heater configured to supply heat to air flowing into the dust collection part housing 141, and a duct configured to guide hot air into the dust collection part housing 141.

The hot air supplied from the sterilization module 150 may pass through the dust collection part housing 141 and the dust bag drawer 144 and supply thermal energy to the dust bag 143, thereby exterminating insects and microorganisms.

### RAG WASHING PART

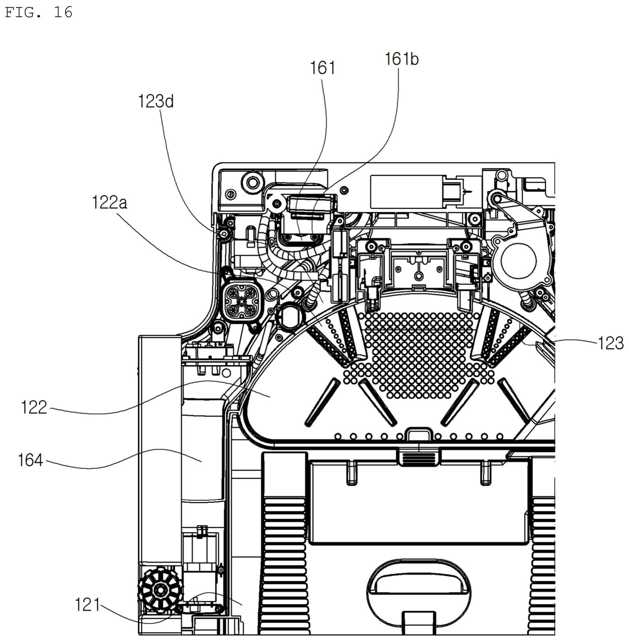

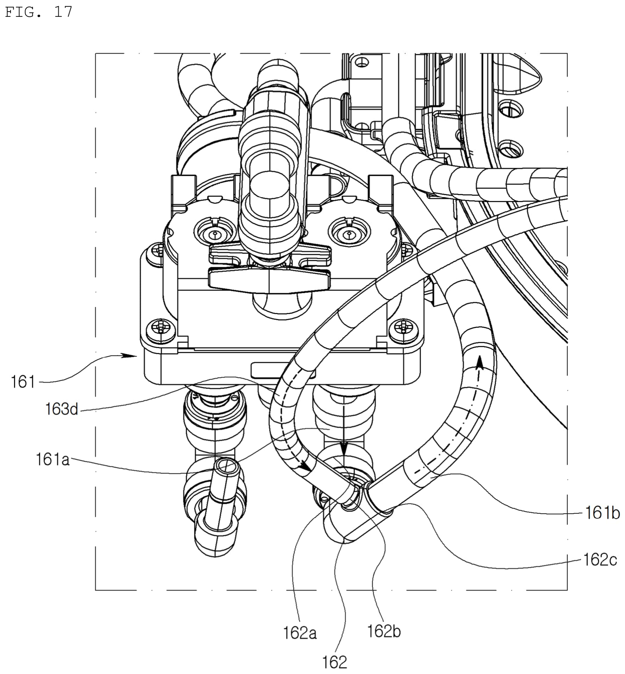

The rag washing part 160 of the robot cleaner station 100 according to the embodiment of the present invention will be described below with reference to FIGS. 16 to 17.

The robot cleaner station 100 according to the embodiment of the present invention may include the rag washing part 160. The rag washing part 160 may supply the washing water to the rag 242 of the robot cleaner 200 coupled to the seating part 120, wash the rag 242, and drain the wastewater produced after the rag 242 is washed.

The rag washing part 160 may include a washing water supply part 160a configured to mix purified water with a liquid containing a detergent and discharge the mixture to an upper side of the washing plate 122. The washing water supply part 160a may include a regulator 161, a mixing chamber 162, the detergent container 163, the wastewater container 164, and a washing water nozzle 161c.

In this case, the detergent container 163 and the wastewater container 164 may be accommodated in a space formed between the inner wall 124 and the outer wall 111 of the housing. The detergent container 163 may be disposed at a lower side of the space formed between the inner wall 124 and the outer wall 111 of the housing, and the wastewater container 164 may be disposed above the detergent container 163.

The water supply pipe of the kitchen cabinet 2 may be connected to the regulator 161 and adjust a flow rate of the water supplied from the water supply pipe. In addition, a part of the purified water having passed through the regulator 161 may be supplied to the water container 230 of the robot cleaner 200 through the water supply nozzle 123c, and the remaining purified water may be supplied to the mixing chamber 162.

In addition, the liquid containing the detergent stored in the detergent container 163 may be supplied to the mixing chamber 162 by a flow force of a pump. A detailed structure of the detergent container 163 will be described below.

The mixing chamber 162 is provided with a space in which the detergent-containing liquid and the purified water may be introduced and mixed, and the mixing chamber 162 may discharge the washing water in which the detergent and the purified water are mixed. The mixing chamber 162 may be provided with a purified water inlet port 162a, a detergent inlet port 162b, and a branch flow path connection port 162c.

The mixing chamber 162 may be provided in the housing 110 disposed rearward of the seating part 120. In this case, a flow path 161a, into which the purified water introduced from the regulator 161, may be connected to the purified water inlet port 162a. In addition, a flow path 163d, into which the detergent-containing liquid is introduced from the detergent container 163, may be connected to the detergent inlet port 162b. Therefore, the regulator 161 and the pump of the detergent container 163 may operate for a predetermined period of time and allow a preset amount of purified water and detergent to the mixing chamber 162.

Meanwhile, the branch flow path connection port 162c may be connected to a branch flow path 161b. The branch flow path 161b may supply the purified water and the detergent-containing washing water to the pair of washing water nozzles 161c.

The branch flow path 161b may be provided in a shape having two tube portions diverged from a single tube portion. In this case, an end of one diverged tube portion may be connected to any one of the pair of washing water nozzles 161c, and an end of the other diverged tube portion may be connected to the remaining one of the pair of washing water nozzles 161c.

The pair of washing water nozzle 161c may be disposed to be spaced apart from each other. In this case, the pair of washing water nozzles 161c may be disposed at positions that are symmetric to each other.

Further, the branch flow path 161b may be connected to the washing water nozzle 161c, the washing water may be introduced into the washing water nozzle 161c, and the washing water may be discharged to the washing plate 122. The washing water nozzle 161c may discharge the washing water to an upper surface of the washing plate 122 through a washing water discharge port 165a. The washing water discharge port 165a may be opened in a direction in which the washing water discharge port 165a faces an upper surface of the rag 242 seated on the washing plate 122. More specifically, the washing water discharge port 165a formed in the washing water nozzle 161c may discharge the washing water toward a washing protrusion portion 122a of the washing plate 122.

The washing water nozzle 161c may be provided on a nozzle installation wall 123d connected to the coupling wall 123. The washing water nozzle 161c may be positioned at a position higher than an uppermost end of the washing plate 122 so that the washing plate 122 may be attached and detached. Therefore, the washing plate 122 and the washing plate coupling part 128 do not collide with the washing water nozzles 161c when the washing plate 122 is detached or the drawer 190 is withdrawn, and a washing water discharge space may be provided between the nozzle installation wall 123d and the washing plate 122.

Further, the washing water nozzles 161c may be disposed at positions spaced apart vertically upward from positions spaced apart from centers of the washing protrusions 122a based on a width direction. Specifically, when the rotation direction of the rag 242 during the process of washing the rag 242 is referred to as one direction, the washing water nozzles 161c may be disposed at positions spaced, in the other direction, apart from the center of the washing protrusion portion 122a based on the width direction.

The detergent container 163 includes a detergent container body 163a, the handle 163b, and detergent container rails 163c.

The detergent container body 163a may provide a space that may store the liquid containing the detergent. For example, the detergent container body 163a may be formed in the shape of a box opened at an upper side thereof.

The handle 163b may be provided forward of the detergent container body 163a. The handle 163b may be configured to be gripped by the user. For example, the handle 163b may be recessed rearward from a front surface of the detergent container body 163a.

With this configuration, when the user grips the handle 163b and pulls the handle 163b forward, the detergent container body 163a may be pulled forward together with the handle 163b and withdrawn. Therefore, according to the present invention, the user may easily pull the detergent container 163 forward, and then the detergent may be supplied.

The detergent container body 163a may be formed with the detergent container rails 163c. The detergent container rail 163c may guide a movement of the detergent container body 163a.

For example, the detergent container rails 163c may be provided in the form of grooves or ribs in the forward/rearward direction on the lateral surfaces of the detergent container body 163a based on the leftward/rightward direction.

With this configuration, in case that the user couples the detergent container 163 to the housing 110, the detergent container 163 may be coupled at an exact position, and the washing water may be prevented from leaking out.

Meanwhile, although not illustrated, rails may be formed on the housing 110 while corresponding to the detergent container rails 163c. The rails may be formed to correspond to shapes and positions of the detergent container rails 163c.

The wastewater container 164 may provide a space that stores the washing water that has been used to wash the rag 242. After the rag 242 is washed, the washing water discharged to the upper surface of the washing plate 122 may flow downward along the inclination of the washing plate 122 and be discharged to the passing holes 122b. The washing water having passed through the passing holes 122b accumulates in the washing plate coupling part 128. In addition, the washing water accumulating in the washing plate coupling part 128 may be introduced into a wastewater suction flow path 166b through the wastewater inlet port 164c, pass through the wastewater suction flow path 166b, and be introduced into the wastewater container 164. That is, the liquid having passed through the washing plate 122 may flow along the washing plate coupling part 128 and be discharged through the wastewater inlet port 164c.

Meanwhile, the wastewater suction flow path 166b is formed in a wastewater suction pipe, the wastewater inlet port 164c is formed at one end of the wastewater suction pipe, and the other end of the wastewater suction pipe communicates with the wastewater container 164. In this case, the wastewater suction pipe may be disposed to pass through a lower side of an outside air supply module 171. That is, the wastewater suction flow path 166b may be disposed below the outside air supply module 171. In addition, the wastewater suction flow path 166b may be disposed below an outside air supply flow path 171a.

The washing water stored in the wastewater container 164 may be discharged to the water drain pipe 25 of the kitchen cabinet 2 through a wastewater discharge flow path 167. One end of the wastewater discharge flow path 167 may be connected to the wastewater container 164, and the other end of the wastewater discharge flow path 167 may be connected to the water drain pipe 25. In this case, the washing water stored in the wastewater container 164 may be allowed to flow through the wastewater discharge flow path 167 by a centrifugal pump (not illustrated) and discharged to the water drain pipe 25.

The wastewater discharge flow path 167 connected to the wastewater container 164 may be connected to the upstream side 25b based on the U-trap 25a of the water drain pipe 25 of the kitchen cabinet 2. This is because an offensive odor or fluid in the water drain pipe 25 may flow reversely to the wastewater discharge flow path 167 in case that the wastewater discharge flow path 167 is connected to the downstream side 25c based on the U-trap 25a of the water drain pipe 25.

In addition, the rag washing part 160 may include a check valve (not illustrated). The check valve may prevent the fluid in the water drain pipe 25 from flowing reversely to the wastewater discharge flow path 167. The check valve may be provided at the other end of the wastewater discharge flow path 167 connected to the water drain pipe 25.

### RAG DRYING PART

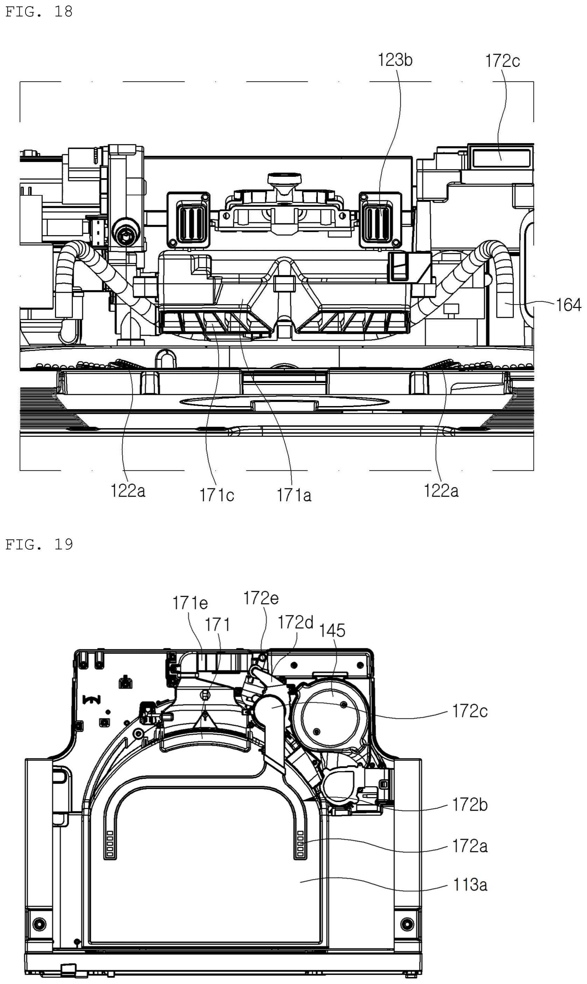

With reference to FIGS. 18 to 20, the robot cleaner station 100 according to the embodiment of the present invention may include the rag drying part 170. In this case, the rag drying part 170 may dry the rag 242 of the robot cleaner 200, which has been washed by the rag washing part 160, or the rag 242 that is wet after a water cleaning process.

The rag drying part 170 may include the outside air supply module 171 and an air discharge part 172.

The outside air supply module 171 may heat air existing outside the housing 110 and supply the heated air to the accommodation space S. The outside air supply module 171 may include the outside air supply flow path 171a, an outside air inlet port 171b, the outside air discharge part 171c, a heater 171d, and a blower fan (not illustrated).

The outside air supply module 171 is formed with the outside air supply flow path 171a. The outside air supply flow path 171a may allow outside air to flow to the outside air discharge part 171c.

The outside air supply flow path 171a may connect an external space of the housing 110 and the accommodation space. One side of the outside air supply flow path 171a may communicate with the external space through the outside air inlet port 171b, and the other side of the outside air supply flow path 171a may communicate with the accommodation space S through the outside air discharge part 171c.

The outside air inlet port 171b may be formed in a rear surface of the housing 110. The outside air inlet port 171b may be provided as a plurality of outside air inlet ports 171b formed in the rear surface of the housing 110. The air existing outside the housing 110 may be introduced into the outside air supply flow path 171a through the outside air inlet port 171b. Therefore, the air existing outside the housing 110 may be introduced into the housing 110.

At least a part of the outside air discharge part 171c may be disposed above the washing plate 122. The outside air discharge part 171c may be open in a direction facing the washing plate 122. The outside air discharge part 171c may be provided as a pair of outside air discharge parts 171c opened at lower sides thereof.

The outside air discharge part 171c may discharge the air having passed through the outside air supply flow path 171a. The outside air discharge part 171c may discharge the air heated by the heater 171d. For example, the outside air discharge part 171c may be formed with an outside air outlet port.

Meanwhile, in the present embodiment, a diameter of the outside air discharge part 171c in the leftward/rightward direction may decrease forward. That is, in the present embodiment, in the case of a diameter of the outside air discharge part 171c in the leftward/rightward direction, a width of a rear end may be larger than a width of a front end. Therefore, it is possible to uniformly dry the entire rag 242 even though the rag 242 having a circular plate-like shape rotates during the drying process.

Meanwhile, the outside air discharge part 171c may be provided with a grille configured to guide a discharge direction of air. Therefore, it is possible to prevent the heated air from being concentratedly discharged to a specific position.

The outside air discharge part 171c may be open toward the upper surface of the rag 242 in the state in which the rag 242 is seated on the washing plate 122. Therefore, the outside air discharge part 171c may be positioned adjacent to the rag 242 and open downward, such that the air discharged from the outside air discharge part 171c may flow toward the rag 242. The outside air discharge parts 171c may discharge hot air between the pair of rags 242 disposed to be vertically symmetric and disposed at a lower side of the robot cleaner 200.

In particular, the outside air discharge part 171c of the present embodiment may have a shape inclined downward toward the front side of the robot cleaner station 100. Therefore, an end of the outside air discharge part 171c, from which the air is discharged, may be formed to be inclined at a predetermined angle with respect to the ground surface. In this case, the angle may be 90 degrees or less. Therefore, the outside air discharge part 171c may discharge the air in a direction intersecting the direction in which the flow guide surface 122c is formed.

The blower fan (not illustrated) may be disposed in the outside air supply flow path 171a and blow the air toward the accommodation space S. When the blower fan (not illustrated) operates, the air introduced through the outside air inlet port 171b may be heated by the heater 171d and discharged to the accommodation space S through the outside air discharge part 171c.

The heater 171d may be disposed in the outside air supply flow path 171a and heat the air flowing through the outside air supply flow path 171a. The heater 171d may heat the air discharged through the outside air discharge part 171c.

The heater 171d may include a heater housing and a heating element. In this case, the heater housing may be disposed in the outside air supply flow path 171a and have a space in which the heating element may be accommodated. In addition, the heating element may heat air to be introduced into the heater housing. Therefore, the air heated by the heating element may be discharged to the accommodation space S through the outside air discharge part 171c and dry the wet rag 242.

The air heated by hot air discharged from the outside air supply module 171 may be discharged through the air discharge part 172.

At least a part of the air discharge part 172 may be disposed above the accommodation space S.

The air heated by hot air discharged from the outside air supply module 171 may supply heat to the rag 242 of the robot cleaner 200. Therefore, moisture, which is absorbed by the rag 242 and remains in the rag 242, may be vaporized by absorbing heat from the air. The vaporized moisture may flow inside the accommodation space S. Therefore, the air in the accommodation space S may include the vaporized moisture, and humidity in the accommodation space S may be increased (hereinafter, the air including the vaporized moisture in the accommodation space S may be referred to as "wet vapor").

Specifically, at least a part of the air discharge part 172 may be disposed on the upper cover 113, and the upper cover 113 may cover an upper side of the accommodation space S.

The air heated by hot air discharged from the outside air supply module 171 is in a state in which humidity is increased as moisture in the rag 242 is vaporized. Therefore, in case that the robot cleaner station 100 is disposed below the kitchen cabinet 2, wet vapor comes into contact with various types of components, such as the baseboard 26, of the kitchen cabinet 2, which adversely affects the components.

In this case, in the present embodiment, the upper cover 113 covers the upper side of the accommodation space S, and a door 126 covers a front side of the accommodation space S, such that the upper cover 113, together with the door 126, may prevent wet vapor in the accommodation space S from being discharged to the outside, thereby preventing the kitchen cabinet 2 from coming into contact with the wet vapor.

The air discharge part 172 may include an air suction port 172a, an air discharge duct 172b, and an air discharge fan 172c.

The air suction port 172a may communicate with the accommodation space S. The air suction port 172a may be disposed at the upper side of the accommodation space S. The wet vapor in the accommodation space S may be discharged through the air suction port 172a.

The air suction port 172a may be disposed to be higher than the robot cleaner 200 from the ground surface in the state in which the robot cleaner 200 is seated on the seating part 120. Therefore, it is possible to improve efficiency in sucking vapor that is raised by convection while the rag is being dried.

For example, the air suction port 172a may be formed in the upper cover 113. In this case, the upper cover 113 may be formed in a shape in which two or more plates are superimposed. Among the two or more plates, the air suction port 172a may be formed in a lowermost plate, and a flow path, which communicates with the air suction port 172a, may be formed between the plates, thereby constituting the air discharge duct 172b.

In another example, the air suction port 172a may be formed in the air discharge duct 172b provided in the form of a circular or quadrangular pipe, and the air discharge duct 172b may be coupled to the upper cover 113.

With this configuration, when the upper cover 113 is separated, the air discharge duct 172b may be separated together with the upper cover 113. In case that the upper side of the robot cleaner station 100 needs to be opened to perform maintenance or the like, an operator may remove even the air discharge duct 172b by simply lifting the upper cover 113.

The air suction port 172a may be formed in the shape of a hole formed in the air discharge duct 172b. For example, the air suction port 172a may be formed in the shape of a plurality of slits formed in parallel in the air discharge duct 172b. Alternatively, the air suction port 172a may be formed in the shape of a long hole formed in the air discharge duct 172b.

Meanwhile, the air suction port 172a may be provided as a plurality of air suction ports 172a disposed at the same distance from the front end of the housing 110. For example, the air suction port 172a may be provided as a pair of air suction ports 172a disposed at the same distance from the front end of the housing 110. That is, the air suction ports 172a may include a first suction port and a second suction port. In this case, the first suction port may be disposed at a front left upper end of the accommodation space S, and the second suction port may be spaced apart from the first suction port and disposed at a front right upper end of the accommodation space S.

A distance from the outside air outlet port 171c to the air suction port 172a may be longer than a distance from the outside air outlet port 171c to the rag 242. This is intended to prevent a situation in which the heated air discharged from the outside air discharge port 171c is sucked directly into the air suction port 172a without being sufficiently supplied to the rag 242, which causes waste of energy.

In addition, the air suction port 172a may be disposed to be closer to the door 131 than the outside air outlet port 171c to the door 131. Because the air suction port 172a is disposed at a front upper side of the accommodation space S, a range of a space in which hot air discharged from the outside air discharge part 171c flows is increased, thereby improving efficiency in drying the rag 242. Therefore, the hot air discharged through the outside air discharge part 171c may dry the rag 242 of the robot cleaner 200 while flowing forward, and then the hot air may be discharged to the air suction port 172a.

In addition, the air suction port 172a may be disposed above a route along which the robot cleaner 200 moves in the housing 110. Therefore, it is possible to prevent the occurrence of condensation on a wall inside the housing 110.

For example, at least a part of the air suction port 172a may be disposed vertically above a position at which the robot cleaner 200 has a largest width in the leftward/rightward direction in the state in which the robot cleaner 200 is seated on the seating part 120. That is, at least a part of the air suction port 172a may be disposed above a position at which a distance between the robot cleaner 200 and the pair of inner walls 124 is shortest. In this case, at least a part of the air suction port 172a may be disposed forward of the washing plate 122.

Therefore, it is possible to prevent vapor generated during the process of drying the rag 242 from flowing to the front side of the robot cleaner station 100 and to prevent moisture from penetrating into a sensor disposed at the front side of the robot cleaner 200 and causing an erroneous operation.

The air discharge duct 172b may connect the air suction port 172a and the air discharge fan 172c and communicate with the water drain pipe 25 of the kitchen cabinet 2. The air discharge duct 172b may guide the wet vapor, which is discharged through the air suction port 172a, to the water drain pipe 25.

One side of the air discharge duct 172b may be coupled to the air discharge fan 172c, and the other side of the air discharge duct 172b may be divided into a plurality of portions. Therefore, wet vapor may be sucked from a plurality of positions even by using the single air discharge fan 172c, thereby stably discharging wet vapor.

An air discharging flow path may be formed in the air discharge duct 172b and communicate with the air suction port 172a.

The air discharging flow path may refer to a flow path through which the air introduced through the air suction port 172a flows. For example, the air discharging flow path may include an internal space of the air discharge duct 172b, an internal space of a housing of the air discharge fan 172c, and an internal space of a check valve 172d. One side of the air discharging flow path may communicate with the air suction port 172a, and the other side of the air discharging flow path may communicate with an air discharge port 172e.

The air discharge fan 172c may induce a flow of air flowing from the air suction port 172a toward the water drain pipe 25. The air discharge fan 172c may generate an airflow in order to suck the wet vapor, which exists in the accommodation space S, into the air suction port 172a and then discharge the wet vapor to the outside through the air discharge duct 172b.

The air discharge fan 172c may include an air discharge fan housing, a fan motor, and an impeller. A flow path may be formed in the air discharge fan housing and communicate with the air discharge duct 172b. When the air discharge fan impeller is rotated by an operation of the air discharge fan motor, the air in the accommodation space S or the housing 110 may be introduced into the air discharge duct 172b, pass through an interior of the air discharge fan housing, and then be discharged to the air discharge port 172e.

Meanwhile, in the present embodiment, the air discharge fan 172c may be coupled to the outside air supply module 171. Specifically, the air discharge fan housing of the air discharge fan 172c may be coupled to the outside air supply module 171 and configured as a single assembly. Therefore, it is possible to minimize a space occupied by the outside air supply module 171 and the air discharge part 172.

The air discharge fan 172c may be disposed on a lateral surface of the outside air supply module 171 based on the leftward/rightward direction. Specifically, the air discharge fan 172c may be disposed between the dust collection motor 145 and the outside air supply module 171. Therefore, the components may be disposed in a limited space, and a space in which a flow path through which vapor may be discharged may be disposed may be ensured.

When the air discharge fan 172c operates, the air in the accommodation space S may be introduced into the air suction port 172a. The air introduced into the air suction port 172a may be discharged to the water drain pipe 25.

The rag drying part 170 may include the check valve 172d configured to prevent the fluid in the water drain pipe 25 from reversely flowing to the air discharge duct 172b. The check valve 172d may be disposed rearward of the air discharge fan 172c. The check valve 172d may communicate with an internal space of the air discharge fan 172c. That is, the check valve 172d may be disposed at a downstream side of the air discharge fan 172c based on the flow direction of the air. The air discharge port 172e may be formed at a rear end of the check valve 172d. The check valve may prevent the fluid in the water drain pipe 25 from reversely flowing to the air discharge part 172.

In this case, a lower end of the air discharge port 172e may be disposed in a direction perpendicular to the ground surface. Specifically, the air discharge port 172e may be disposed in an air discharge pipe disposed in a direction perpendicular to the ground surface, and the air discharge pipe may be connected to the check valve. With this configuration, by using a property that high-temperature, high-humidity air undergoes upward convection, it is possible to prevent the fluid discharged from the air discharge port 172e from flowing reversely.

The air discharge part 172 may be connected to a downstream side of the water drain pipe 25 based on the U-trap 25a. Specifically, the air discharge port 172e may be connected to the water drain pipe 25 by means of a flow path member. For example, the flow path member may be a hose. This is because hot air discharged through the air discharge part 172 cannot pass through the water drain pipe 25 because of the water accumulated in the U-trap 25a in case that the air discharge part 172 is connected to the upstream side 25b based on the U-trap 25a of the water drain pipe 25. In addition, this is intended to prevent a situation in which offensive odor, which is generated from the air discharged from the air discharge part 172, reversely flows along the water drain pipe 25 and spreads toward the kitchen.

The wet vapor, which is discharged to the air suction port 172a and passes through the air discharge fan 172c, may be discharged to the outside of the housing 110 along the flow path member via the air discharge port 172e.

In this case, the flow path member may penetrate any one of two opposite sides of an outer wall thereof and be connected to the water drain pipe 25. With this configuration, a connection direction of a flow path member may be selected in accordance with an installation environment of the robot cleaner station 100 of the present invention, which may facilitate installation and management.

### WATER LEAKAGE DETECTION STRUCTURE

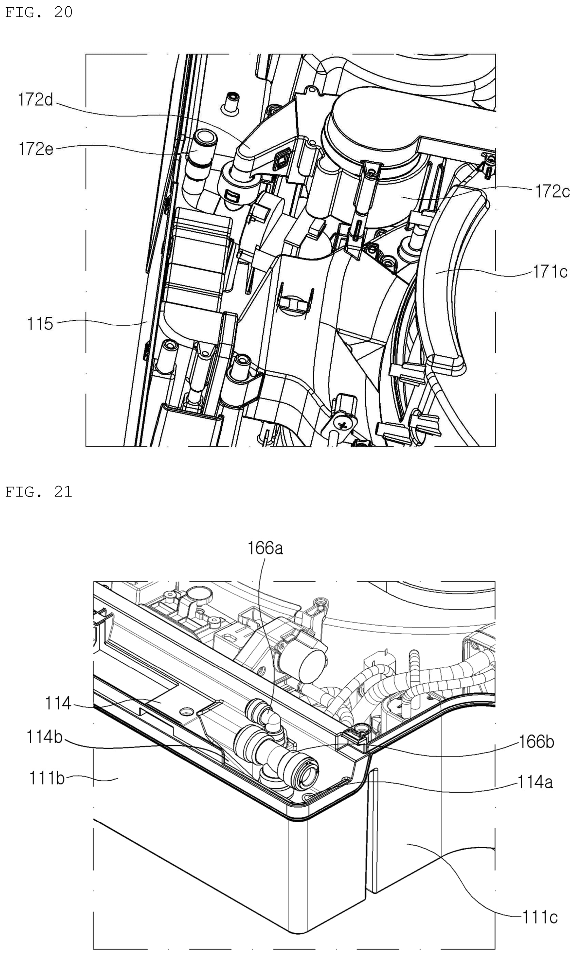

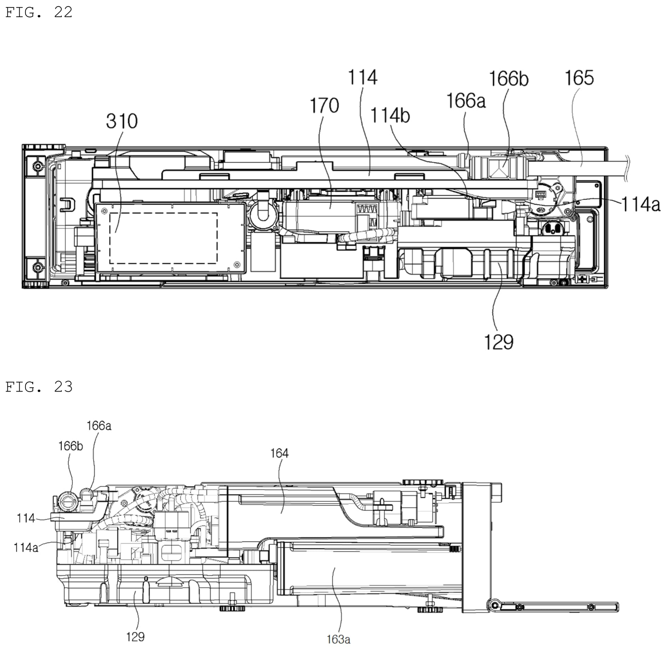

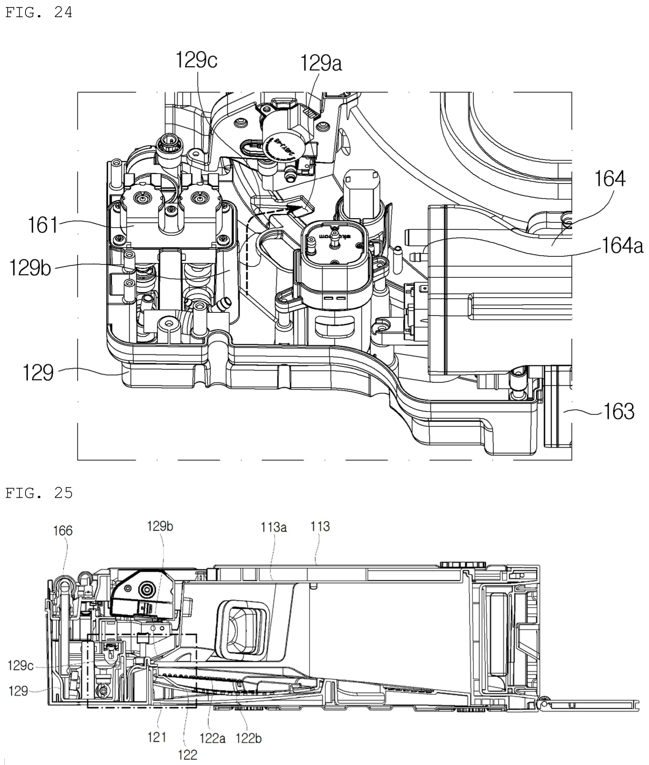

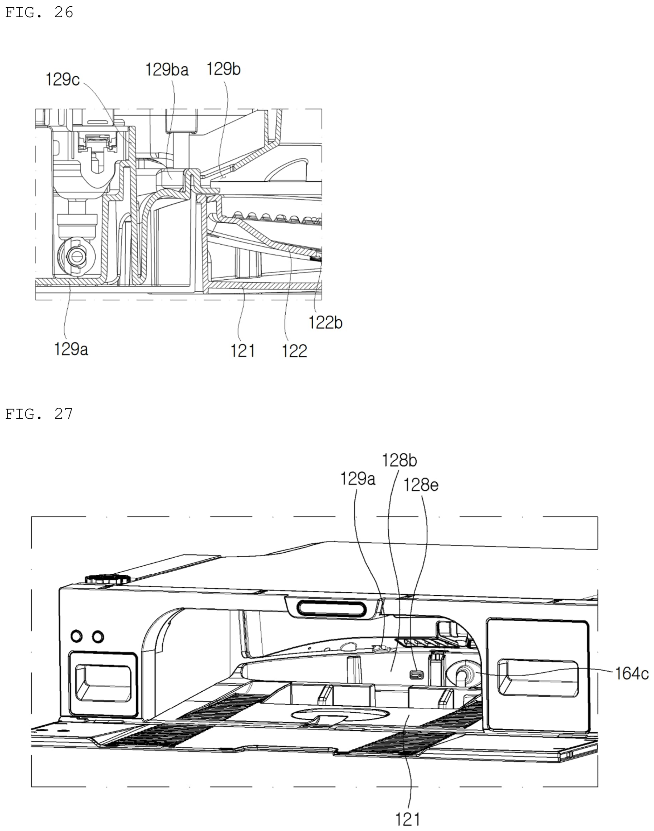

FIG. 21 is an enlarged view for explaining a fitting part of the robot cleaner station according to the embodiment of the present invention. FIG. 22 is a rear view for explaining an arrangement relationship of an inner chamber in the robot cleaner station according to the embodiment of the present invention. FIG. 23 is a left side view for explaining the arrangement relationship of the inner chamber in the robot cleaner station according to the embodiment of the present invention. FIG. 24 is an enlarged view for explaining the inner chamber of the robot cleaner station according to the embodiment of the present invention. FIG. 25 is a cross-sectional view for explaining the inner chamber of the robot cleaner station according to the embodiment of the present invention. FIG. 26 is an enlarged view for explaining a height of a flow path hole in the robot cleaner station according to the embodiment of the present invention. FIG. 27 is an enlarged view for explaining a level detection sensor of the robot cleaner station according to the embodiment of the present invention.

In the robot cleaner station 100 according to the embodiment of the present invention, the rag washing part 160 may further include a connection pipe 165 and a fitting part 166.

The robot cleaner station 100 of the present invention may include the connection pipe 165 through which water is supplied from the outside or used wastewater is discharged back to the outside.

The connection pipe 165 may be formed in the shape of a hose. One side of the connection pipe 165 may be connected to the water supply pipe or the water drain pipe 25 of the kitchen cabinet 2. The other side of the connection pipe 165 may be coupled to the fitting part 166 so that the connection pipe 165 is fixed to the housing 110. The connection pipe 165 may be detachably coupled to the fitting part 166. Therefore, the operator may couple or separate the connection pipe 165 to or from the fitting part 166, as necessary, when the robot cleaner station 100 is installed.

The connection pipe 165 may include a water supply connection pipe 165a through which water is supplied from the outside, and a water drain connection pipe 165b through which used wastewater is discharged to the outside.

One side of the water supply connection pipe 165a may be connected to the water supply pipe of the kitchen cabinet 2. The other side of the water supply connection pipe 165a may be detachably coupled to a water supply fitting part 166a. Because the water supply fitting part 166a is pivotably coupled to the housing 110, the water supply connection pipe 165a may be selectively inserted into the left or right side of the housing and connected to the water supply fitting part 166a. The water introduced through the water supply connection pipe 165a may be introduced into the washing water supply part 160a. Alternatively, the water introduced through the water supply connection pipe 165a may move to the rag drying part 170 in order to generate steam.

One side of the water drain connection pipe 165b may be connected to the water drain pipe 25. The other side of the water drain connection pipe 165b may be detachably coupled to a water drain fitting part 166b. Because the water drain fitting part 166b has a shape divided into two opposite sides, the water drain connection pipe 165b may be selectively inserted into the left or right side of the housing and connected to the water drain fitting part 166b. The water collected in the washing tub 121 may flow to the wastewater container 164, and the water introduced into the wastewater container 164 may flow to the water drain pipe through the water drain connection pipe 165b.

A diameter of the water drain connection pipe 165b may be larger than a diameter of the water supply connection pipe 165a. The water flowing inside the water supply connection pipe 165a may be connected to the water drain pipe 25 of the kitchen cabinet 2 and have a relatively high hydraulic pressure. In contrast, the water flowing through the water drain connection pipe 165b may have a relatively low hydraulic pressure. In order to maintain a smooth flow during the process in which water is discharged, the water drain connection pipe 165b may be designed to be larger in diameter than the water supply connection pipe 165a. Therefore, the water drain connection pipe 165b may allow the water to be smoothly discharged even under a low hydraulic pressure, thereby improving discharge efficiency.

The fitting part 166 is configured to connect the connection pipe 165 and the housing 110. The fitting part 166 may be formed in the shape of a pipe opened at two opposite sides thereof. The fitting part 166 may serve to connect constituent elements connected to two opposite sides.

The fitting part 166 may be coupled to the housing 110. The fitting part 166 may be coupled to a fitting coupling part 114 coupled to an upper side of a rear surface 111b of the housing 110. The fitting part 166 may be coupled to the fitting coupling part 114 in a direction perpendicular to the ground surface. The fitting part 166 may be pivotably coupled to the fitting coupling part 114.

The fitting part 166 may include the water supply fitting part 166a connected to the water supply connection pipe 165a, and the water drain fitting part 166b connected to the water drain connection pipe 165b.

The water supply connection pipe 165a may be detachably coupled to one side of the water supply fitting part 166a. The other side of the water supply fitting part 166a may be coupled to the fitting coupling part 114. The water supply fitting part 166a may be coupled to a portion of the fitting coupling part 114 that defines a stepped portion together with a portion where a drain hole 114a is formed. That is, the water supply fitting part 166a may be coupled to a position higher, based on the ground surface, than the portion where the drain hole 114a is formed. Therefore, water, which leaks from a portion where the water supply fitting part 166a and the water supply connection pipe 165a are coupled, may flow in a direction toward the drain hole 114a.

In addition, the water supply fitting part 166a may be coupled to a position higher than a portion where the water drain fitting part 166b to be described below is coupled. Therefore, it is possible to prevent the wastewater discharged through the water drain connection pipe 165b from being introduced into a gap between the water supply fitting part 166a and the fitting coupling part 114.

The water supply fitting part 166a may be formed in a shape bent once at a right angle. The water supply fitting part 166a may be pivotably coupled to the fitting coupling part 114. One side of the water supply fitting part 166a may be disposed to face the left side of the housing 110. In this case, the water supply fitting part 166a may be coupled to the water supply connection pipe 165a inserted into the left side of the housing 110. Alternatively, one side of the water supply fitting part 166a may be disposed to face the right side of the housing 110. In this case, the water supply fitting part 166a may be coupled to the water supply connection pipe 165a inserted into the right side of the housing 110.

According to this configuration, the operator may selectively connect the water supply connection pipe 165a to the left or right side of the housing 110 regardless of the water supply pipe of the kitchen cabinet 2 based on the robot cleaner station 100.

Meanwhile, one side of the water drain fitting part 166b may be detachably coupled to the water drain connection pipe 165b. The other side of the water drain fitting part 166b may be coupled to the fitting coupling part 114. The water drain fitting part 166b may be coupled to the portion of the fitting coupling part 114 where the drain hole 114a is formed. The water drain fitting part 166b may be disposed in a direction in which an inclined surface 114b of the fitting coupling part 114 ends. Therefore, water, which leaks from a portion where the fitting part 166 and the connection pipe 165 are coupled, may flow along the inclined surface 114b and flow in the direction toward the drain hole 114a.

In addition, the water drain fitting part 166b may be coupled to a position lower than the portion where the water supply fitting part 166a is coupled.

The water drain fitting part 166b may be formed in a branched shape extending in opposite directions. One side of the water drain fitting part 166b may be divided into two opposite sides. The other side of the water drain fitting part 166b may be coupled to the fitting coupling part 114. The two opposite sides of the water drain fitting part 166b may be disposed to face the left and right sides of the housing 110. In this case, the water drain fitting part 166b may be coupled to the water drain connection pipe 165b inserted into the left side of the housing 110. An opening portion of the water drain fitting part 166b, which is directed toward the right side of the housing 110, may be sealed by a closure. Alternatively, the water drain fitting part 166b may be coupled to the water drain connection pipe 165b inserted into the right side of the housing 110. An opening portion of the water drain fitting part 166b, which is directed toward the left side of the housing 110, may be sealed by a closure.

According to this configuration, the operator may selectively connect the water drain connection pipe 165b to the left or right side of the housing 110 regardless of the position of the water drain pipe based on the robot cleaner station 100.

Meanwhile, the housing 110 of the robot cleaner station 100 of the present invention may include the fitting coupling part 114.

The fitting coupling part 114 may be disposed above the rear surface 111b of the housing 110. The fitting coupling part 114 may extend in the leftward/rightward direction of the housing 110. The fitting coupling part 114 may be formed to include a surface parallel to the ground surface. The fitting coupling part 114 may be disposed at a rear end of the upper cover 113. The fitting coupling part 114 may be disposed rearward of the washing tub 121.

The fitting part 166 may be coupled to the fitting coupling part 114. Alternatively, a power line for supplying electric power to the robot cleaner station 100 may be coupled to the fitting coupling part 114.

The fitting coupling part 114 may have a stepped portion. A stepped portion may be formed between the portion of the fitting coupling part 114 where the water supply fitting part 166a is coupled and the portion of the fitting coupling part 114 where the drain hole 114a to be described below is formed. In addition, a stepped portion may be formed between the portion of the fitting coupling part 114 where the upper cover 113 is coupled and the portion of the fitting coupling part 114 where the drain hole 114a is formed.

With this configuration, it is possible to prevent the water collected in the drain hole 114a from being introduced into the housing or a portion where the power line is coupled.

The fitting coupling part 114 may include the drain hole 114a and the inclined surface 114b.

The drain hole 114a may guide water, which leaks from the fitting part 166, to the washing tub. An inner chamber 129 to be described below may be positioned below the drain hole 114a. That is, the water, which leaks between the fitting part 166 and the connection pipe 165, may flow to the inner chamber 129 through the drain hole 114a. The water flowing to the inner chamber 129 may flow back to the washing tub 121.

The drain hole 114a may be formed in the fitting coupling part 114. The drain hole 114a may be formed in a portion where the water drain fitting part 166b is coupled. The drain hole 114a may be formed in the direction in which the inclined surface 114b formed in the fitting coupling part 114 ends. The portion where the drain hole 114a is formed may have a stepped portion with the portion where the water supply fitting part 166a is coupled. The drain hole 114a may be formed at a position lower, based on the ground surface, than the portion where the water supply fitting part 166a is coupled.

The fitting coupling part 114 may include the inclined surface 114b inclined downward in the direction in which the drain hole 114a is positioned. The water drain fitting part 166b may be disposed in the direction in which the inclined surface 114b ends. The drain hole 114a may be disposed in the direction in which the inclined surface 114b ends. The inclined surface 114b may be disposed between the water supply fitting part 166a and the rear surface 111b of the housing 110.

According to this configuration, the water on the fitting coupling part 114 may be guided to the drain hole 114a.

The robot cleaner station 100 according to the present invention may further include the inner chamber 129. The inner chamber 129 may be accommodated in the housing 110 and define a space in which the liquid is collected. The inner chamber 129 may have a structure surrounded by sidewalls so that the liquid may be collected.

The inner chamber 129 may be integrated with an inner cover 113a configured to cover the upper side of the robot cleaner 200. Some of the sidewalls of the inner chamber 129 may be formed to face the rear surface 111b or a left surface 111c of the housing 110. One side wall of the inner chamber 129 may be configured in a shape extending from the inner cover 113a. The above-mentioned configuration may integrally design the inner cover 113a and the inner chamber 129 and minimize the number of components by means of a structure continuously formed without a separate component.

The inner chamber 129 may be disposed in a space formed between the washing tub 121 and the rear surface 111b of the housing. The inner chamber 129 may be disposed below the fitting coupling part 114. The inner chamber 129 may be disposed vertically below the drain hole 114a. The liquid on the fitting coupling part 114 may be introduced into the inner chamber 129 through the drain hole 114a.

The inner chamber 129 may be formed with a flow path hole 129b for guiding the liquid to the washing tub 121. The inner chamber 129 may communicate with the accommodation space S through the flow path hole 129b. The flow path hole 129b may be disposed in the accommodation space S and disposed between the washing tub wall 128b and the coupling wall 123.

The liquid having passed through the flow path hole 129b may fall onto an upper portion of the washing plate 122. The liquid may flow to the washing tub 121 through the passing hole 122b formed in the washing plate 122.

The flow path hole 129b may be disposed at a height spaced apart from a bottom surface of the inner chamber 129 at a predetermined interval. Therefore, the liquid may flow to the washing tub 121 when a level of the liquid in the inner chamber 129 reaches a height at which the flow path hole 129b is positioned.

Meanwhile, a flow path guide groove 129ba may be formed in the sidewall of the inner chamber 129 and assist the fluid in flowing to the flow path hole 129b. The flow path guide groove 129ba may be formed in a wall surface of the inner chamber.

The flow path guide groove 129ba may be disposed to be spaced apart from constituent elements adjacent in the leftward/rightward direction. The flow path guide groove 129ba may be formed to be lower than the constituent elements adjacent in the leftward/rightward direction. The flow path guide groove 129ba may have a shape in which a width thereof gradually decreases in the direction toward the flow path hole 129b. The flow path guide groove 129ba may prevent the fluid from being discharged from the interior of the housing 110 to another component or route.

The robot cleaner station 100 according to the present invention may further include a level detection sensor 128e. The level detection sensor 128e may be disposed on the washing tub wall 128b. The water used to wash the rag 242 may be accommodated in the washing tub 121. When the level detection sensor 128e detects that water has accumulated in the washing tub 121, the fluid may flow to the wastewater container 164 through a wastewater discharge port 164a.

Meanwhile, the liquid accommodated in the inner chamber 129 may flow to the washing tub 121 through the flow path hole 129b. In case that the level of the water in the washing tub 121 increases, the level detection sensor 128e may detect the increase in the level of the water. That is, the level detection sensor 128e may indirectly detect leakage of water introduced from the inner chamber 129.

Therefore, the present invention may manage water leakage by utilizing the existing constituent element.

In another example, the robot cleaner station 100 of the present invention may include a leakage detection sensor 129d in order to directly detect water leakage. The leakage detection sensor 129d may be disposed on the bottom surface of the inner chamber 129. In case that the leakage detection sensor 129d detects the liquid in the inner chamber 129, the leakage detection sensor 129d may transmit a signal to a controller 300.

With this configuration, the leakage detection sensor 129d may detect, at an early stage, water leakage that may occur in the housing 110. In addition, it is possible to prevent damage to internal constituent elements or deterioration in functions caused by the water leakage.

Meanwhile, various components related to the operation of the robot cleaner station 100 may be accommodated in the housing 110. The components may be accommodated in a space surrounded by the washing tub 121 and the rear surface 111b of the housing 110. Some components may be disposed by being coupled to the inner chamber 129. That is, the component may be accommodated in the housing 110 in a state in which the component is coupled to the inner chamber 129.

The inner chamber 129 may be formed with a chamber main body 129a configured to define an overall external shape, and a component seating portion 129c protruding from the chamber main body 129a and configured to accommodate the component. The component seating portion 129c may support a lower portion of the component. The component seating portion 129c may be formed to surround at least a part of an outer peripheral surface of the component.

The component seating portion 129c may have a cylindrical shape opened at an upper side thereof, as a whole. The operator may move the component in the upward/downward direction to couple or separate the component to or from the inner chamber 129.

The component of the rag washing part 160 may be seated on the component seating portion 129c. For example, the regulator 161 may be coupled to the component seating portion 129c. In another example, the centrifugal pump for discharging wastewater may be coupled to the component seating portion 129c.

Meanwhile, the components accommodated on the component seating portion 129c may include electronic components. In case that moisture penetrates into the electronic components, the electronic components may fail.

Therefore, the components may be coupled to the component seating portion 129c in a state in which the components, which require electrical connection or operations, are disposed at an upper end, and the components, which do not require electrical connection or operations, are disposed at a lower end.

Meanwhile, the component seating portion 129c may include a configuration protruding from the chamber main body 129a and configured to come into contact with and support a lateral surface of the component. The corresponding support configuration may be formed in a shape that surrounds an outer periphery of the component, and the component may be inserted and accommodated into a groove provided therein. A height of the corresponding support configuration may be set to be higher than a height at which the flow path hole 129b is disposed. That is, an uppermost end of the component seating portion 129c may be disposed at a position higher in height than the flow path hole 129b.

This configuration may be designed such that the liquid is discharged through the flow path hole 129b before the liquid reaches the upper end of the component that is not accommodated on the component seating portion 129c.

various components for operating the robot cleaner station 100 may be accommodated at a rear side of the robot cleaner station 100 according to the present invention. The robot cleaner station 100 may be formed with the space formed between the washing tub 121 and the rear surface 111b of the housing 110.

Meanwhile, a printed circuit board 310 of the robot cleaner station 100 of the present invention may be disposed rearward of the washing tub 121. The printed circuit board may be disposed on the rear surface 111b of the housing 110.

Meanwhile, the rag drying part 170 may discharge hot air between the pair of rags 242 of the robot cleaner 200. Therefore, the rag drying part 170 may be disposed rearward of the washing tub 121. In addition, the rag drying part 170 may be disposed on the same line as a vertically symmetric axis of the washing tub 121.

In a state in which the robot cleaner station 100 is viewed from the rear side, the inner chamber 129 may be disposed at a right side based on the rag drying part 170. The printed circuit board 310 may be disposed at a left side based on the rag drying part 170. That is, the inner chamber 129 may be positioned at a side opposite to a side at which the printed circuit board 310 is disposed based on the rag drying part 170.

In addition, in a state in which the robot cleaner station 100 is viewed from the rear side, the rag washing part 160 may be disposed at the right side based on the rag drying part 170. The wastewater container 164 may be disposed at the right side based on the rag drying part 170. All the water supply fitting part 166a, the water drain fitting part 166b, and the drain hole 114a, which are provided to supply water to the robot cleaner station 100 and discharge water from the robot cleaner station 100, may be positioned at the right side based on the rag drying part 170.

The wastewater container 164 may accommodate wastewater that has been used to wash the rag 242. The liquid accommodated in the wastewater container 164 may be discharged to the outside through the wastewater discharge port 164a. The wastewater discharge port 164a may be disposed in a rear surface of the wastewater container 164. The liquid accommodated in the wastewater container 164 may flow to the outside through a pipe connected to the wastewater discharge port 164a. However, water leakage may occur between the wastewater discharge port 164a and the pipe connected to the wastewater discharge port 164a.

The inner chamber 129 may be disposed to accommodate water that may leak between the wastewater discharge port 164a and the pipe connected to the wastewater discharge port 164a. The inner chamber 129 may be disposed vertically below the wastewater discharge port 164a.

In addition, the detergent container 163 configured to store the detergent for washing the rag 242 may be disposed below the wastewater container 164. The detergent accommodated in the detergent container 163 may flow to the washing water supply part 160a through a discharge port disposed in a rear surface of the detergent container 163. The inner chamber 129 may be disposed vertically below the discharge port of the detergent container 163.

Meanwhile, the inner chamber 129 may be disposed vertically below the washing water supply part 160a that mixes the detergent in the detergent container and purified water supplied through the water supply connection pipe 165a.

Therefore, the inner chamber 129 may be disposed below constituent elements that use water in the robot cleaner station 100. The inner chamber 129 may accommodate water that may leak from connection portions between the constituent elements. Therefore, the inner chamber 129 may prevent the liquid from flowing outward toward another portion of the robot cleaner station 100.

### CONTROL CONFIGURATION

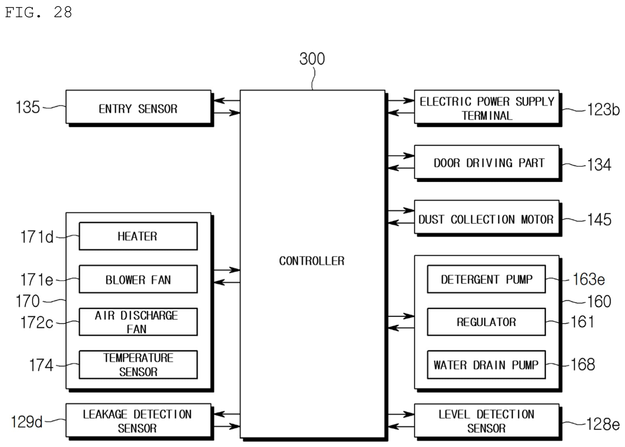

FIG. 28 is a block diagram for explaining a control configuration of the cleaner station according to the embodiment of the present invention.

The control configuration of the robot cleaner station 100 of the present invention will be described below with reference to FIG. 28.

The cleaner station 100 according to the embodiment of the present invention further include the controller 300 configured to control the seating part 120, the dust collection motor 145, the rag washing part 160, and the rag drying part 170.

The controller 300 may include the printed circuit board 310 and elements mounted on the printed circuit board 310. The controller 300 may include a plurality of printed circuit boards 310.

The printed circuit board 310 may control a power source of the robot cleaner station 100. Alternatively, the printed circuit board 310 may control an operation of the robot cleaner station 100.

The controller 300 may receive a signal from the entry sensor 135 and control the door driving part 134.

The controller 300 may detect the approach of the robot cleaner 200 and control the door driving part 134 to rotate the door 131. Specifically, the controller 300 may detect, by means of the entry sensor 135, whether the robot cleaner 200 enters. Specifically, the controller 300 may open the inlet/outlet 127 by rotating the door 131 when a distance between the robot cleaner 200 and the door 131 is shorter than a preset distance. In addition, the controller 300 may close the inlet/outlet 127 by rotating the door 131 when the robot cleaner 200 is coupled to the seating part 120.

When electric power is supplied to the battery of the robot cleaner 200 from the electric power supply terminal 123b, the controller 300 may determine that the robot cleaner 200 is coupled to the seating part 120.

The controller 300 may operate the dust collection motor 145 to suck dust from the inside of the dust bin 220 of the robot cleaner 200.

Meanwhile, the robot cleaner station 100 according to the embodiment of the present invention may include a memory (not illustrated). The memory may include various data for operating or driving the robot cleaner station 100.

Meanwhile, the robot cleaner station 100 according to the embodiment of the present invention may include a communication part (not illustrated). The communication part may support wireless communication with other devices, such as the robot cleaner 200 or a terminal (not illustrated), existing outside the robot cleaner station 100. As a wireless communication module for wireless communication support, a near-field communication module or a far-field communication module may be provided.

For example, a short-range communication may be Bluetooth communication, near field communication (NFC) communication, or the like.

For example, the far-field communication may be wireless LAN (WLAN), digital living network alliance (DLNA), wireless broadband (Wibro), world interoperability for microwave access (Wimax), global system for mobile communication (GSM), code division multi-access (CDMA), code division multi-access 2000 (CDMA 2000), enhanced voice-data optimized or enhanced voice-data only (EV-DO), wideband CDMA (WCDMA), high-speed downlink packet access (HSDPA), high-speed uplink packet access (HSUPA), IEEE 802.16, long term evolution (LTE), long term evolution-advanced (LTEA), wireless mobile broadband service (WMBS), Bluetooth low energy (BLE), Zigbee, radio frequency (RF), long range LoRa, and the like.

The controller 300 may control the rag washing part 160.

Specifically, the controller 300 may control a detergent pump 163e. The controller 300 may operate the detergent pump 163e to discharge the detergent, which is stored in the detergent container 163, to the rag 242.

In addition, the controller 300 may control the regulator 161. The controller 300 may operate the regulator 161 to adjust the amount of purified water to be discharged to the rag 242.

In addition, the controller 300 may control a water drain pump 168. The controller 300 may operate the water drain pump 168 to drain wastewater produced after the rag 242 is washed.

The controller 300 may control the rag drying part 170.

Specifically, the controller 300 may control the heater 171d. The controller 300 may operate the heater 171d to heat air to be discharged to the rag 242.

In addition, the controller 300 may control the blower fan 171e. The controller 300 may operate the blower fan 171e to discharge air to the rag 242.

In addition, the controller 300 may control the air discharge fan 172c. The controller 300 may operate the air discharge fan 172c to discharge the air, which has been used to dry the rag 242, to the outside.

In addition, the controller 300 may receive a signal from a temperature sensor 174. The controller 300 may measure a temperature of air in the housing 110 based on temperature information received from the temperature sensor 174. Further, the controller 300 may sterilize bacteria present in the rag 242 by controlling the operation of the heater 171d based on temperature information received from the temperature sensor 174.

In addition, the controller 300 may receive a signal from the dust bag detection part 141c. When the dust bag detection part 141c detects that the dust bag 143 is coupled, the dust bag detection part 141c may transmit a signal to the controller 300, and the controller 300 may control the dust collection part 140 based on the signal. For example, the controller 300 may operate the dust collection motor 145 only in a state in which the dust bag 143 is coupled. In addition, the controller 300 may operate the sterilization module 150 only in the state in which the dust bag 143 is coupled.

In addition, the controller 300 may receive a signal from the level detection sensor 128e.

The level detection sensor 128e may detect a level of the water in the washing tub.

Specifically, the level detection sensor 128e may be an electrode sensor that detects an electric current flowing through the liquid. The electrode sensor may detect a flow of electric current based on a dielectric property of the liquid by using two or more electrodes. For example, when the level of the water in the washing tub 121 reaches a preset upper limit value, a flow of electric current between the electrodes may be detected, and a signal may be transmitted to the controller 300.

In this case, the controller 300 may provide the user with information about level of the water in the washing tub 121 through an output part. The user may withdraw the washing tub 121 from the robot cleaner station 100 and discharge the liquid. Alternatively, the controller 300 may operate the pump to discharge the liquid from the interior of the washing tub 121.

In addition, the controller 300 may receive a signal from the leakage detection sensor 129d.

The leakage detection sensor 129d may detect the liquid in the inner chamber 129. When the leakage detection sensor 129d detects the liquid, the leakage detection sensor 129d may transmit a signal to the controller 300. In this case, the controller 300 may stop the operation of the robot cleaner station 100. Alternatively, the controller 300 may notify the user of the corresponding information through the output part.

### DESCRIPTION OF REFERENCE NUMERALS

1: Robot cleaner station
2: Kitchen cabinet
100: Robot cleaner station
110: Housing
114: Fitting coupling part
114a: Drain hole
114b: Inclined surface
120: Seating part
122: Washing plate
128: Washing tub
129: Inner chamber
129a: Chamber main body
129b: Flow path hole
129ba: Flow path guide groove
129c: Component seating portion
129d: Leakage detection sensor
130: Door part
140: Dust collection part
141: Dust collection part housing
144: Dust bag drawer
145: Dust collection motor
160: Rag washing part
165: Connection pipe
165a: Water supply connection pipe
165b: Water drain connection pipe
166: Fitting part
166a: Water supply fitting part
166b: Water drain fitting part
170: Rag drying part
171: Outside air supply module
172: Air discharge part
190: Drawer
200: Robot cleaner
300: Controller

## Claims

1. A robot cleaner station comprising:
a housing (110);
a washing tub (121) configured to support a lower portion of a robot cleaner and coupled to the housing (110) in a withdrawable manner;
a connection pipe (165) through which water for washing a rag of the robot cleaner is supplied from the outside or wastewater used to wash the rag of the robot cleaner is discharged to the outside;
a fitting part (166) configured to connect the connection pipe (165) and the housing (110); and
a fitting coupling part (114) disposed rearward of the washing tub (121) and coupled to the fitting part (166),
**characterized in that** the fitting coupling part (114) is formed with a drain hole (114a) configured to guide water, which leaks from the fitting part (166), to the washing tub (121).

2. The robot cleaner station of claim 1, wherein the fitting part (166) comprises a water supply fitting part (166a) to which a water supply connection pipe (165a) through which water introduced from an external water supply source is supplied into the housing (110) is detachably coupled, and
wherein the fitting coupling part (114) is formed with a stepped portion formed between a portion where the water supply fitting part (166a) is coupled and a portion where the drain hole (114a) is formed.

3. The robot cleaner station of claim 1, or 2, wherein the fitting coupling part (114) comprises an inclined surface (114b) inclined downward in a direction toward which the drain hole (114a) is positioned.

4. The robot cleaner station of claim 1, 2, or 3, comprising:
an inner chamber (129) disposed below the fitting coupling part (114) and configured to collect a liquid.

5. The robot cleaner station of claim 4, wherein the inner chamber (129) is formed with a flow path hole (129b) configured to guide the liquid, which is collected in the inner chamber (129), to the washing tub (121).

6. The robot cleaner station of claim 5, wherein the inner chamber (129) comprises:
a chamber main body (129a); and
a component seating portion (129c) protruding from the chamber main body (129a) and configured to accommodate a component in the housing (110), and
wherein an uppermost end of the component seating portion (129c) is positioned to be higher than the flow path hole (129b).

7. The robot cleaner station of claim 4, 5, or 6, comprising:
a rag drying part (170) configured to discharge hot air between a pair of rags disposed at a lower side of the robot cleaner and disposed to be vertically symmetric; and
a printed circuit board (310) disposed rearward of the washing tub (121) and configured to control a power source,
wherein the inner chamber (129) is positioned at a side opposite to a side at which the printed circuit board (310) is disposed based on the rag drying part (170).

8. The robot cleaner station of any one of claims 4 to 7, comprising:
a wastewater container (164) configured to store water used to wash the rag; and
a wastewater discharge port (164aa) disposed in a rear surface of the wastewater container (164) and configured to discharge the water to the outside from an interior of the wastewater container (164),
wherein the inner chamber (129) is disposed vertically below the wastewater discharge port (164aa).

9. The robot cleaner station of any one of claims 4 to 8, comprising:
a washing water supply part (160a) configured to mix a detergent for washing the rag with purified water supplied through the connection pipe (165),
wherein the inner chamber (129) is disposed vertically below the washing water supply part (160a).

10. The robot cleaner station of any one of claims 1 to 9, wherein the washing tub (121) comprises a level detection sensor (128e) configured to detect a level of a liquid in the washing tub (121).

11. The robot cleaner station of claim 10, wherein the level detection sensor (128e) operates while detecting an electric current flowing through the liquid.

12. The robot cleaner station of any one of claims 4 to 11, wherein a leakage detection sensor (129d) is disposed on a bottom surface of the inner chamber (129).

13. The robot cleaner station of any one of claims 1 to 12, wherein the connection pipe (165) comprises a water supply connection pipe (165a) through which water introduced from an external water supply source is supplied into the housing (110),
wherein the fitting part (166) comprises a water supply fitting part (166a) detachably coupled to the water supply connection pipe (165a), and
wherein the water supply fitting part (166a) is pivotably coupled to the fitting coupling part (114).

14. The robot cleaner station of any one of claims 1 to 13, wherein the connection pipe (165) comprises a water drain connection pipe (165b) through which water in the housing (110) is discharged to the outside,
wherein the fitting part (166) comprises a water drain fitting part (166b) detachably coupled to the water drain connection pipe (165b), and
wherein the water drain fitting part (166b) has a branched shape extending in opposite directions.
